(19) Europäisches Patentamt
European Patent Office
Office européen des brevets

(11) **EP 3 187 989 B1**

(12) **FASCICULE DE BREVET EUROPEEN**

(45) Date de publication et mention de la délivrance du brevet:
**14.11.2018 Bulletin 2018/46**

(51) Int Cl.:
**G06F 3/046** (2006.01)    *G06F 3/041* (2006.01)
*A63F 13/214* (2014.01)    *H04W 4/02* (2018.01)

(21) Numéro de dépôt: **16206922.3**

(22) Date de dépôt: **27.12.2016**

(54) **PROCÉDÉ ET DISPOSITIF POUR L'EXTENSION DE SURFACES DE DÉTECTION INTERFAÇANT UNE PLURALITÉ D'ÉLÉMENTS MOBILES AVEC UN SYSTÈME INFORMATIQUE**

VERFAHREN UND VORRICHTUNG ZUR AUSDEHNUNG DER DETEKTIONSFLÄCHEN, DIE ALS SCHNITTSTELLEN ZWISCHEN EINER VIELZAHL VON MOBILEN ELEMENTEN UND EINEM IT-SYSTEM DIENEN

METHOD AND DEVICE FOR EXTENDING DETECTION SURFACES INTERFACING A PLURALITY OF MOVABLE ELEMENTS WITH A COMPUTER SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **30.12.2015   FR 1563477**

(43) Date de publication de la demande:
**05.07.2017   Bulletin 2017/27**

(73) Titulaire: **Starbreeze Paris**
**75008 Paris (FR)**

(72) Inventeurs:
  • **Duteil, Christophe**
    **75014 Paris (FR)**

  • **Chabin, Laurent**
    **92600 Asnières sur Seine (FR)**
  • **Lefevre, Valentin**
    **92800 Puteaux (FR)**

(74) Mandataire: **Santarelli**
    **49, avenue des Champs-Elysées**
    **75008 Paris (FR)**

(56) Documents cités:
    **EP-A1- 0 347 396     FR-A1- 2 860 985**
    **FR-A1- 2 964 479**

**Description**

La présente invention concerne les interfaces entre des objets mobiles et un système informatique, notamment dans le domaine du suivi de personnes dans un environnement prédéterminé, et plus particulièrement un procédé et un dispositif pour l'extension de surfaces de détection interfaçant une pluralité d'éléments mobiles avec un système informatique.

Dans de nombreuses situations, il peut être nécessaire, pour un système informatique, de détecter la position et/ou l'orientation d'éléments mobiles pour permettre à ce dernier de réagir en conséquence. Ainsi, par exemple, dans des applications de réalité virtuelle permettant d'enrichir un environnement visualisé par plusieurs utilisateurs, l'application mise en oeuvre par le système informatique doit connaître la position de tous les utilisateurs, pour calculer une représentation bidimensionnelle d'un objet tridimensionnelle, typiquement selon une position et une orientation, pour chaque utilisateur, afin d'ajouter cette représentation à la scène visualisée par chacun des utilisateurs.

Il existe différentes technologies pour détecter la position et/ou l'orientation d'objets réels sur des surfaces de détection permettant d'utiliser ces objets comme interfaces de systèmes informatiques.

Ainsi, par exemple, le document FR 2 860 985 décrit des éléments communicants ayant la forme de pions, figures ou cartes, portant chacun une étiquette radiofréquence munie d'un code d'identification individuel. Un plateau de jeu communicant avec un ordinateur externe et comportant des éléments de détection peut détecter, par radiofréquence, la présence, la nature et la position des éléments communicants sur le plateau de jeu.

Toujours à titre d'exemple, les inventeurs ont précédemment mis au point un procédé et des dispositifs pour interfacer une pluralité d'éléments mobiles avec un système informatique. Ce procédé et ces dispositifs ont fait l'objet d'une demande de brevet ayant conduit au brevet FR 2 964 479.

Dans le domaine technique éloigné des systèmes de communication mobile de type accès multiple à répartition dans le temps (TDMA), le document EP0347396A1 décrit le principe du transfert intercellulaire ("handover") en utilisant un seul créneau temporel ("time slot ") lors du passage d'une station mobile (MS) entre deux stations de bases (Bm et Bn).

Conformément à l'invention décrite dans ce document, les éléments mobiles sont pourvus d'un ou plusieurs modules de localisation et d'un module d'activation permettant de déterminer la position et, de préférence, l'orientation, de chaque élément mobile, de façon séquentielle. La captation des positions d'éléments mobiles s'effectue ici par champ électromagnétique. A ces fins, une surface de détection de positions des éléments mobiles, composée d'un maillage de type ligne/colonne de captation électromagnétique, est utilisée. Elle est associée à un module électronique capable de calculer, par démultiplexage, la position d'un module de localisation émettant un champ électromagnétique.

Chaque module de localisation est donc sélectionné de façon séquentielle, selon un identifiant qui lui est propre, afin qu'il émette un champ électromagnétique. Un module de pilotage de détection de position est associé à la surface de détection afin d'activer séquentiellement les émissions électromagnétiques des modules de localisation via un signal de commande.

La surface de détection des positions est, par exemple, une carte de type PCB (sigle de *Printed Circuit Board* en terminologie anglo-saxonne) de réception électromagnétique, souple ou rigide.

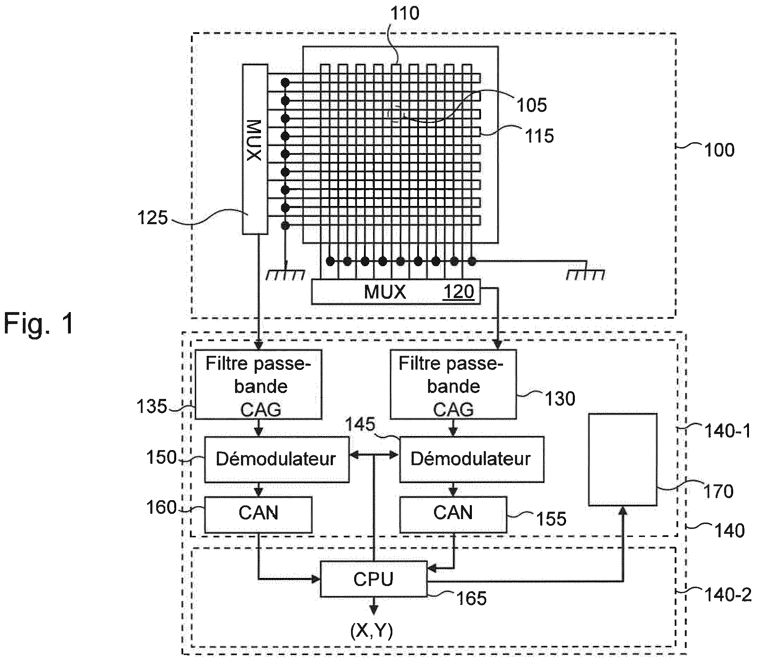

La figure 1 illustre un exemple de surface de détection et de logique associée.

La surface de détection 1100 est ici constituée d'un maillage sous forme de lignes et de colonnes constituant une grille conductrice. Cette dernière comprend un ensemble de boucles conductrices suivant deux axes orthogonaux. Chaque boucle est un capteur discret permettant de mesurer l'intensité du courant ou la tension induite par un élément rayonnant, typiquement un solénoïde appartenant à un élément mobile dont la position et/ou l'orientation doivent être calculées, qui est positionné sur la surface de détection.

A titre d'illustration, il est considéré qu'un solénoïde est placé à la position 105, c'est-à-dire à l'intersection des boucles 110 et 115 dont une extrémité est reliée à une masse et l'autre extrémité est reliée aux composants électroniques utilisés pour calculer une position. Lorsque le solénoïde situé à la position 105 est alimenté, il génère un courant inductif dans les boucles 110 et 115 qui peut être analysé et comparé au courant induit dans les autres boucles. Il est ainsi possible, par couplage inductif entre le solénoïde et la grille et par mesure du courant induit, de déterminer la position de solénoïde.

Des multiplexeurs 120 et 125 sont reliés à chaque boucle de chacun des deux axes de la grille, c'est-à-dire ici à chacune des boucles verticales et horizontales, respectivement. Les sorties des multiplexeurs 120 et 125 sont connectées aux contrôleurs automatiques de gain (CAG) 130 et 135, respectivement, d'un module de pilotage de détection et de capture de position, référencé 140-1, d'un module matériel 140. Les signaux de sortie des contrôleurs automatiques de gain 130 et 135 sont tout d'abord démodulés dans les démodulateurs 145 et 150, respectivement. La démodulation produit un signal continu (DC, sigle de *Direct Current* en terminologie anglo-saxonne) proportionnel à la sinusoïde originale complétée de composantes alternatives (AC, sigle d'*Alternating Current* en terminologie anglo-saxonne) multiples de la fréquence fixe émise par le solénoïde.

Un module de calcul 140-2 du module matériel 140 pilote ici les multiplexeurs 120 et 125 afin d'activer séquentiellement les boucles, c'est-à-dire d'activer une boucle n+1 après une boucle n. Lorsque la dernière boucle est atteinte, le processeur initie un nouveau cycle et pilote l'activation de la première boucle.

Comme illustré, un filtre passe-bande est ici mis en oeuvre dans chaque contrôleur automatique de gain 130 et 135 pour supprimer les harmoniques indésirables du signal démodulé ainsi que le bruit de fond électromagnétique. Ce filtrage permet d'affiner les mesures des signaux issus des multiplexeurs 120 et 125, qui sont démodulés dans les démodulateurs 145 et 150 puis numérisés dans les convertisseurs analogique/numérique (CAN) 155 et 160, respectivement.

Les valeurs numériques obtenues sont transmises à l'unité centrale de traitement (CPU) 165 du module de calcul 140-2 pour être mémorisées. Comme illustré, l'unité centrale de traitement 165 contrôle les démodulateurs 145 et 150.

Après que les valeurs aient été mémorisées, l'unité centrale de traitement incrémente l'adresse des multiplexeurs afin de procéder à la numérisation des signaux provenant des boucles suivantes. Lorsqu'une dernière boucle est atteinte, l'unité centrale de traitement réinitialise l'adresse du multiplexeur correspondant à la valeur de la première boucle de l'axe considéré.

A la fin d'un cycle, l'unité centrale de traitement a mémorisé, pour chaque axe, autant de valeurs numériques qu'il y a de boucles adjacentes proches de la position du solénoïde. A partir de ces valeurs, l'unité centrale de traitement calcule la position du solénoïde par interpolation comme décrit ci-après.

Le module de pilotage de détection et de capture de position 140-1 comprend ici un émetteur 170, commandé par l'unité centrale de traitement 165 du module de calcul 140-2, permettant d'activer un module de localisation d'un élément mobile.

Ainsi, pour estimer la position d'un ensemble de module de localisation, il est nécessaire d'activer séquentiellement chaque module de localisation et, pour chacune de ces activations, selon le mode de réalisation décrit ici, effectuer un cycle sur chaque ensemble de boucles.

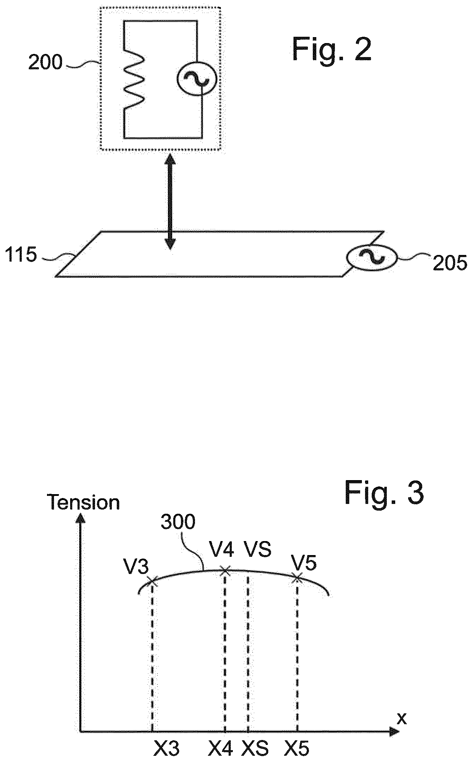

La figure 2 illustre schématiquement le principe physique de couplage inductif entre un solénoïde et une boucle conductrice d'une surface de détection.

Chaque élément mobile dont la position et/ou l'orientation doivent être calculées comprend au moins un solénoïde dont l'axe est, de préférence, orientée vers la surface de détection.

Le solénoïde 200 est parcouru par un courant alternatif et émet un champ électromagnétique qui se propage vers la surface de détection, notamment, dans cet exemple, vers la boucle 115. La boucle 115, recevant un champ électromagnétique issu du solénoïde 200, se couple avec le solénoïde 200. Il est alors possible de mesurer un signal alternatif aux bornes de cette boucle, référencées 205.

Le couplage entre le solénoïde 200 et la boucle 115 peut s'exprimer sous la forme de la relation suivante,

$$R = \frac{k}{D^2} E$$

où E désigne la tension aux bornes du solénoïde 200, R désigne la tension du signal reçu aux bornes 205 de la boucle de réception 115, D est la distance entre le solénoïde 200 et la boucle de réception 115 et k est une constante liée à des facteurs intrinsèques du système comprenant le solénoïde et la boucle de réception, notamment le nombre de spires du solénoïde et la taille de la boucle.

La figure 3 illustre schématiquement un mécanisme d'interpolation permettant de calculer la position d'un solénoïde placé sur une surface de détection, selon un axe donné, à partir de mesures obtenues par un système tel que celui décrit en référence à la figure 1.

Il est supposé ici que le solénoïde se situe à proximité de boucles verticales B3, B4 et B5, positionnées selon des abscisses X3, X4 et X5, les tensions mesurées aux bornes de ces boucles étant notées V3, V4 et V5, respectivement. Le solénoïde se trouve ici a une position, en abscisse, notée XS.

Les coordonnées X3, X4 et X5 peuvent être obtenues par l'unité centrale de traitement à partir d'un identifiant de la boucle correspondante (ces valeurs sont prédéfinies selon le schéma de routage de la surface de détection et, de préférence, mémorisées dans une mémoire non volatile).

La portion de courbe 300 représentée sur la figure 3 illustre la variation de tension pour la position XS du solénoïde selon les positions des boucles couplées avec le solénoïde, extrapolée à partir des valeurs mesurées par les boucles B3, B4 et B5. Elle peut être assimilée à une fonction du second degré de type parabolique. Cette approximation locale correspond, en pratique, au phénomène de couplage électromagnétique entre un solénoïde et des boucles d'une grille conductrice.

Les relations suivantes illustrent cette propriété.

$$V3 = a(X3 - XS)^2 + b$$

$$V4 = a(X4 - XS)^2 + b$$

$$V5 = a(X5 - XS)^2 + b$$

où a et b sont des constantes, a étant une constante inférieure à zéro (a<0).

Par ailleurs, compte tenu de l'hypothèse d'une fonction du second degré, les relations entre les abscisses X3, X4 et X5 peuvent s'exprimer sous la forme suivante,

$$X4 - X3 = X5 - X4 = \Delta X$$

$$X5 - X3 = 2\Delta X$$

($\Delta X$ représentant la distance entre les abscisses X3 et X4 et entre les abscisses X4 et X5).

Ainsi, il est possible d'interpoler la position du solénoïde selon la formule suivante :

$$XS = X3 + \frac{\Delta X}{2} \frac{3V3 - 4V4 + V5}{V3 - 2V4 + V5}$$

Il est également possible, selon la même logique, de déterminer la position du solénoïde selon l'axe des ordonnées.

En outre, la distance entre le solénoïde et la boucle (c'est à dire l'altitude du solénoïde par rapport à la surface de détection) peut être définie selon la relation suivante,

$$D = \sqrt{\frac{k}{R}} E$$

La distance D est donc fonction de la valeur R représentant la tension aux bornes des boucles considérées de la surface de détection. Elle peut être extrapolée à partir des mesures réalisées. Il est noté que la précision de ce calcul de distance est notamment liée à la stabilité du signal E émis par le solénoïde dont la valeur doit être aussi constante que possible au cours du temps, ce qui nécessite une alimentation stabilisée dans le module de localisation qui ne doit pas chuter lors de la décharge de la batterie. Ceci peut être assuré par un régulateur de tension du module de localisation.

Alors qu'une telle solution s'avère très efficace pour interfacer un ensemble d'éléments mobiles avec une surface de petite taille, il existe des difficultés pour déterminer la position et/ou l'orientation d'éléments mobiles relativement à des surfaces de grande taille et des surfaces de grande taille pouvant comprendre des parties discontinues (i.e. non connexes).

L'invention permet de résoudre au moins un des problèmes exposés précédemment.

L'invention a ainsi pour objet un procédé de contrôle dans un système comprenant une surface de détection interfaçant une pluralité d'éléments mobiles avec un système informatique, la surface de détection comprenant une pluralité de surfaces de détection élémentaires, les surfaces de détection élémentaires formant au moins un groupe comprenant plusieurs sous-groupes, chaque sous-groupe comprenant au moins une surface de détection élémentaire, chaque surface de détection élémentaire étant configurée pour déterminer une position d'un élément mobile, chaque élément mobile de la pluralité d'éléments mobiles pouvant être activé par un module de gestion associé à un sous-groupe, le procédé comprenant les étapes suivantes, pour au moins un sous-groupe,

- inscription d'au moins un élément mobile auprès du module de gestion du au moins un sous-groupe, le au moins un élément mobile étant inscrit dans une liste de références d'éléments mobiles ;
- réservation d'une période de temps différente pour chaque élément mobile référencés dans la liste de référence, ladite période de temps permettant l'activation d'un élément mobile et la détermination d'une position d'un élément mobile activé, les périodes de temps réservées formant une séquence permettant une activation séquentielle des éléments mobiles inscrits auprès du module de gestion dudit au moins un sous-groupe ;

au moins un élément mobile étant inscrit auprès de modules de gestion d'au moins deux sous-groupes différents, la période de temps réservée pour ledit au moins un élément mobile inscrit auprès de modules de gestion d'au moins deux sous-groupes différents étant la même dans chacun desdits au moins deux sous-groupes.

Le procédé selon l'invention permet ainsi la gestion de surfaces de détection de tailles variables, en particulier de grandes tailles, connexes ou non, permettant la détermination en temps réel de la position d'un nombre important d'éléments mobiles.

Selon un mode de réalisation particulier, le procédé comprend en outre une étape de comparaison d'une position d'un élément mobile avec une zone prédéterminée et, en réponse à la comparaison, une étape de modification d'au moins une période de temps réservée pour l'élément mobile dont la position est comparée avec une zone prédéterminée.

Selon un mode de réalisation particulier, ladite étape de modification d'au moins une période de temps réservée comprend la réservation d'une nouvelle période de temps pour l'élément mobile dont la position est comparée avec une zone prédéterminée, la nouvelle période de temps étant la même qu'une autre période de temps précédemment réservée pour l'élément mobile dont la position est comparée avec une zone prédéterminée, la nouvelle période de temps et l'autre période de temps étant réservées dans des modules de gestion de sous-groupes différents.

Selon un mode de réalisation particulier, ladite étape de modification d'au moins une période de temps réservée comprend la suppression d'une période de temps précédemment réservée pour l'élément mobile dont la position est comparée avec une zone prédéterminée.

Selon un mode de réalisation particulier, la zone prédéterminée est une zone comprenant une partie d'une première surface de détection élémentaire d'un premier sous-groupe et une partie d'une seconde surface de détection élémentaire d'un second sous-groupe différent du premier sous-groupe.

Selon un mode de réalisation particulier, le procédé comprend en outre une étape de synchronisation de modules de calcul de position associés à chaque surface de détection élémentaire d'un sous-groupe.

Selon un mode de réalisation particulier, le procédé comprend en outre une étape d'activation d'un élément mobile et une étape de détermination d'une position d'un élément mobile activé, les étapes d'activation et de détermination étant effectuées selon ladite séquence.

Selon un mode de réalisation particulier, l'étape de détermination d'une position d'un élément mobile activé comprend une étape de mesure d'une tension en sortie d'un circuit de traitement connecté à chaque boucle de détection d'une pluralité de boucles de détection d'une surface de détection élémentaire, une étape d'obtention d'une impédance de chacune des boucles de détection de la pluralité des boucles de détection et une étape de calcul d'une tension induite aux bornes de chacune des boucles de détection de la pluralité des boucles de détection en fonction des impédances obtenues et de mesures de tension.

Selon un mode de réalisation particulier, un élément mobile est activé par un signal radio comprenant un identifiant unique d'un élément mobile à activer.

Selon un mode de réalisation particulier, le procédé comprend en outre une étape de détermination de la position d'un élément mobile précédemment activé et une étape de transmission de la position déterminée audit élément mobile précédemment activé.

L'invention a également pour objet une surface de détection pour interfacer une pluralité d'éléments mobiles avec un système informatique, la surface de détection comprenant une pluralité de surfaces de détection élémentaires, les surfaces de détection élémentaires formant au moins un groupe comprenant plusieurs sous-groupes, chaque sous-groupe comprenant au moins une surface de détection élémentaire, chaque surface de détection élémentaire étant configurée pour déterminer une position d'un élément mobile, chaque élément mobile de la pluralité d'éléments mobiles pouvant être activé par un module de gestion associé à un sous-groupe, chaque module de gestion associé à un sous-groupe étant configuré pour :

- inscrire au moins un élément mobile dans une liste de références d'éléments mobiles ;
- réserver une période de temps différente pour chaque élément mobile référencés dans la liste de référence, ladite période de temps permettant l'activation d'un élément mobile et la détermination d'une position d'un élément mobile activé, les périodes de temps réservées formant une séquence permettant une activation séquentielle des éléments mobiles inscrits auprès du module de gestion dudit au moins un sous-groupe ;

des modules de gestion associés à des sous-groupes étant en outre configurés pour qu'une même période de temps soit réservée pour un même élément mobile inscrit auprès de plusieurs modules de gestion d'au moins deux sous-groupes différents.

La surface selon l'invention permet ainsi la mise en oeuvre de surfaces de détection de tailles variables, en particulier de grandes tailles, connexes ou non, permettant la détermination en temps réel de la position d'un nombre important d'éléments mobiles.

Selon un mode de réalisation particulier, au moins une surface de détection élémentaire comprend une pluralité de boucles de détection et selon laquelle un module de calcul de position est associé à la au moins une surface de détection élémentaire, le module de calcul de position étant configuré pour obtenir une impédance pour chacun des boucles de détection élémentaire et pour calculer une tension induite aux bornes de chacune des boucles de détection de la pluralité des boucles de détection en fonction des impédances obtenues.

Selon un mode de réalisation particulier, un module de gestion associé à un sous-groupe est en outre configuré pour activer un élément mobile par un signal radio comprenant un identifiant unique d'un élément mobile à activer.

L'invention a également pour objet un programme d'ordinateur comprenant des instructions adaptées à la mise en oeuvre d'au moins certaines des étapes du procédé décrit précédemment lorsque ledit programme est exécuté sur un microcontrôleur. Les avantages procurés par ce programme d'ordinateur sont similaires à ceux évoqués précédemment au regard du procédé.

D'autres avantages, buts et caractéristiques de la présente invention ressortent de la description détaillée qui suit, faite à titre d'exemple non limitatif, au regard des dessins annexés dans lesquels :

- la figure 1 illustre un exemple de surface de détection et de logique associée ;
- la figure 2 illustre schématiquement le principe physique de couplage inductif entre un solénoïde et une boucle conductrice d'une surface de détection ;
- la figure 3 illustre schématiquement un mécanisme d'interpolation permettant de calculer la position d'un solénoïde placé sur une surface de détection, selon un axe donné, à partir des mesures obtenues par un système tel que celui décrit en référence à la figure 1 ;

- la figure 4 illustre schématiquement quelques boucles de détection d'une surface de détection élémentaire ainsi que les circuits associés permettant de déterminer la position et/ou l'orientation d'un élément mobile pourvu d'un solénoïde, en tenant compte de l'impédance des boucles de détection ;
- la figure 5 illustre un environnement 500 dans lequel la position et/ou l'orientation d'éléments mobiles peuvent être déterminées à l'aide de plusieurs surfaces de détection élémentaires ;
- la figure 6 illustre un exemple simplifié de diagramme temporel pour la détermination de la position et/ou l'orientation d'éléments mobiles inscrits auprès d'un module de gestion d'une même surface de détection élémentaire maître ;
- la figure 7 illustre certaines étapes d'un algorithme mis en oeuvre pour déterminer la position d'éléments mobiles situés à proximité de surfaces de détection élémentaires d'un sous-groupe k ;
- la figure 8 illustre un exemple simplifié de diagramme temporel pour la détermination de la position et/ou l'orientation d'éléments mobiles inscrits auprès de modules de gestion de surfaces de détection élémentaires maîtres d'un même groupe ;
- la figure 9, comprenant les figures 9a à 9d, illustre un exemple de gestion de *TimeSlots* et d'inscription d'un élément mobile dont la position peut être déterminée par des surfaces de détections élémentaires de deux sous-groupes d'un même groupe ;
- la figure 10 illustre des étapes d'un algorithme pour gérer les inscriptions d'éléments mobiles auprès de modules de gestion de sous-groupes de surfaces de détection élémentaires ;
- la figure 11 illustre un exemple d'architecture logique d'un système pour déterminer la position et/ou l'orientation d'éléments mobiles placés à proximité d'une surface de détection comprenant plusieurs surfaces de détection élémentaires organisées par sous-groupes et groupes ; et
- la figure 12 illustre un exemple d'architecture d'un module central ou d'un module pouvant être associé à une surface de détection élémentaire maître ou à un groupe.

De façon générale, l'invention a pour objet les surfaces de détection et la gestion de surfaces de détection constituées de plusieurs surfaces de détection élémentaires permettant de déterminer la position (abscisse, ordonnée et/ou altitude) et/ou l'orientation (cap, tangage et/ou roulis) d'éléments mobiles ou de pièces disposés sur celles-ci et utilisés conjointement.

Selon des modes de réalisation particuliers, chaque surface de détection élémentaire comprend une feuille souple, par exemple une feuille en matière plastique de type PET (acronyme de polyéthylène téréphtalate), comprenant des boucles formées dans un matériau conducteur tel que l'argent. Ces boucles conductrices forment le maillage (lignes et colonnes) décrit précédemment, permettant la détection d'un champ électromagnétique. Ces boucles peuvent notamment être sérigraphiées, déposées ou imprimées.

La sérigraphie de telles boucles peut être réalisée par un étalage d'une pâte telle qu'une pâte d'argent sur le support.

L'impression peut être effectuée selon une technologie standard d'impression à jet d'encre, en utilisant une encre conductrice, par exemple une encre chargée en particules d'argent, notamment en nanoparticules d'argent. Il est observé que l'impression peut offrir des avantages pratiques tels que le déroulement du support souple et l'impression simultanée des boucles conductrices.

Selon d'autres modes de réalisation, les boucles de détection sont réalisées à partir de fils conducteurs pouvant être collés sur le support, insérés entre des couches du support ou cousus à ce dernier.

Les impédances des boucles obtenues selon ces procédés sont sensiblement équivalentes mais peuvent varier d'une boucle à une autre, notamment du fait de leur longueur. Les inventeurs ont ainsi observé que contrairement à des boucles réalisées avec un matériau à base de cuivre sur des surfaces en fibre de verre de faibles dimensions ou sur des surfaces équivalentes, elles ne pouvaient être négligées ici.

Les supports ainsi produits peuvent être de grandes tailles, typiquement de plusieurs mètres carrés. A titre d'illustration, il peut s'agir de bandes d'un mètre sur deux.

Selon des modes de réalisation particuliers, l'impédance de chaque boucle est mesurée et mémorisée pour être utilisée lors de la détermination de la position et/ou l'orientation d'un solénoïde émettant un champ électromagnétique. Les mesures peuvent être effectuées lors de la fabrication des boucles ou ultérieurement, durant une phase d'initialisation. Les valeurs mesurées peuvent être mémorisées dans une table en lien avec une référence des boucles correspondantes. Ces références sont uniques.

Bien entendu, il existe de nombreuses solutions pour référencer les boucles. Une solution simple consiste à les indexer de façon hiérarchique. Ainsi, par exemple, lorsqu'une gestion centralisée des détections est effectuée, pour une surface de détection formée à partir de plusieurs groupes, chaque groupe comprenant plusieurs sous-groupes et chaque sous-groupe comprenant plusieurs surfaces de détection élémentaires, la référence d'une boucle peut comprendre un index de boucle dans la surface de détection élémentaire, un index de surface de détection élémentaire, un index de sous-groupe et un index de groupe.

Alternativement, lorsqu'une gestion des détections est effectuée pour chaque sous-groupe, la référence d'une boucle peut comprendre un index de boucle dans la surface de détection élémentaire et un index de surface de détection élémentaire.

Un exemple d'une telle table est donné en annexe (Table 1). Comme illustré, le sous-groupe k comprend M surfaces de détection élémentaires, la première surface de détection élémentaire comprenant N1 boucles de détection, la seconde surface de détection élémentaire comprenant N2 boucles de détection et ainsi de suite. A titre d'illustration, l'impédance mesurée de la deuxième boucle de détection de la première surface de détection élémentaire est égale à 600 ohms ($\Omega$). De même, toujours à titre d'exemple, l'impédance mesurée de la première boucle de détection de la surface de détection élémentaire ayant l'index j est égale à 570 ohms.

La lecture des signaux électriques générés par couplage est effectuée de façon similaire à la lecture décrite en référence à la figure 1, en tenant compte de l'impédance de chaque boucle.

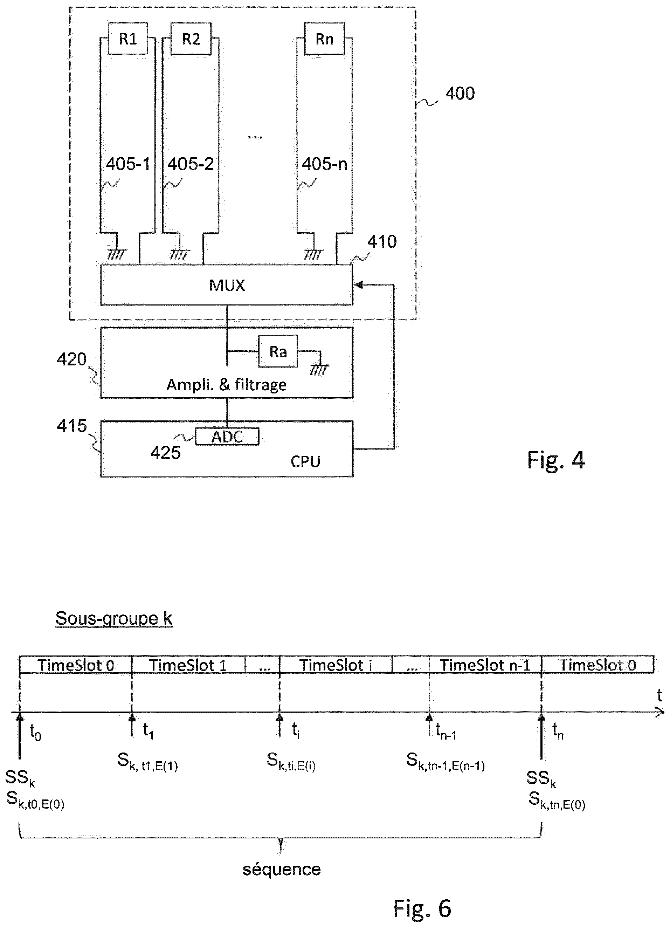

La figure 4 illustre schématiquement quelques boucles de détection d'une surface de détection élémentaire ainsi que les circuits associés permettant de déterminer la position et/ou l'orientation d'un élément mobile pourvu d'un solénoïde, en tenant compte de l'impédance des boucles de détection.

A titre d'illustration, la surface de détection élémentaire 400 comprend n boucles de détection référencées 405-1 à 405-n. Chacune de ces boucles à une impédance noté Ri où *i* correspond à l'index de la boucle. Ces boucles de détection sont reliées à un multiplexeur 410, commandé par une unité centrale de traitement (CPU) 415. Le multiplexeur 410 permet la sélection d'une boucle de détection de telle sorte que l'une des extrémités de la boucle sélectionnée soit reliée à la sortie du multiplexeur, l'autre extrémité de la boucle sélectionnée étant reliée à la masse.

La sortie du multiplexeur est ici reliée à un module de traitement analogique 420 permettant notamment l'amplification et le filtrage d'un signal reçu d'une boucle de détection. Comme illustré, l'entrée du module de traitement analogique 420 a une impédance Ra. La sortie du module de traitement analogique 420 est reliée à un convertisseur analogie-numérique 425 pouvant être intégré dans l'unité centrale de traitement 415.

L'unité centrale de traitement 415 est capable d'obtenir une mesure des signaux issus de chaque boucle afin de déterminer la position et/ou l'orientation d'un élément mobile pourvu d'un solénoïde.

A ces fins, il est observé que la tension notée *Vout* mesurée à la sortie du module de traitement analogique 420 peut s'exprimer, en fonction d'une tension induite aux bornes de la boucle de détection ayant l'index *i* (notée *Vind*), de la façon suivante :

$$Vout = G \frac{Ra}{Ra + Ri} Vind$$

où G représente le gain de la chaine de traitement analogique.

Ainsi, les inventeurs ont observés qu'estimer la position et/ou l'orientation d'un élément mobile par rapport à la sortie la tension (*Vout*) mesurée à la sortie du module de traitement analogique 420 peut, du fait des impédances pouvant être différentes dans les boucles de détection, conduire à des résultats erronés.

Par conséquent, pour toutes les boucles de détection, l'unité centrale de traitement 415 calcule la tension induite ($Vind_i$) aux bornes de la boucle de détection sélectionnée (ayant l'index *i*), cette tension induite étant indépendante de l'impédance de la boucle, pour déterminer la position et/ou l'orientation d'un élément mobile.

En d'autres termes, la position d'un élément mobile peut être interpolée selon la formule suivante :

$$XS = X3 + \frac{\Delta X}{2} \frac{3Vind_3 - 4Vind_4 + Vind_5}{3Vind_3 - 2Vind_4 + Vind_5}$$

où X3, X4 et X5 sont les abscisses de trois boucles de détection B3, B4 et B5, positionnées selon des abscisses X3, X4 et X5 (en considérant que $\Delta X$ représente la distance entre les abscisses X3 et X4 et entre les abscisses X4 et X5), les tensions induites calculées aux bornes de ces boucles étant notées $Vind_3$, $Vind_4$ et $Vind_5$, respectivement. Le solénoïde se trouve ici a une position, en abscisse, notée XS.

La tension induite $Vind_i$ aux bornes d'une boucle de détection i peut s'exprimer en fonction de la tension $Vout_i$ mesurée à la sortie du module de traitement analogique 420 de la façon suivante :

$$Vind_i = Vout_i \frac{Ra + Ri}{G \times Ra}$$

Il est ainsi possible de déterminer la position d'un élément mobile selon des tensions mesurées en tenant compte de l'impédance de chaque boucle de détection.

Il est observé ici que les valeurs des impédances des boucles de détection peuvent être mesurées et mémorisées de façon périodique pour éviter toute dérive du système.

Selon des modes de réalisation particuliers, plusieurs surfaces de détection élémentaires sont combinées pour étendre la superficie de la zone dans laquelle la position et/ou l'orientation d'éléments mobiles peuvent être déterminées et/ou pour permettre l'existence de zones discontinues dans lesquelles la position et/ou l'orientation d'éléments mobiles peuvent être déterminées.

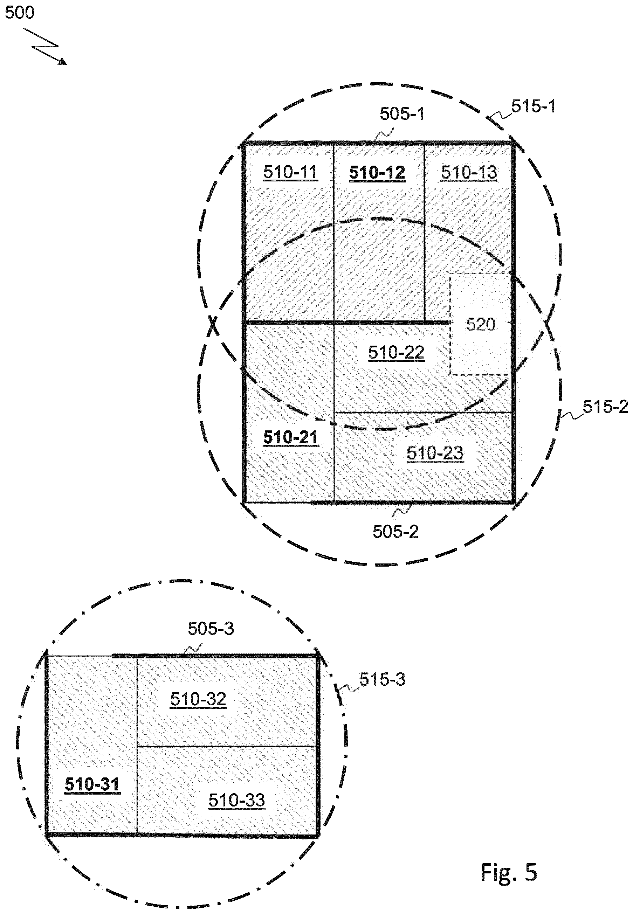

La figure 5 illustre un environnement 500 dans lequel la position et/ou l'orientation d'éléments mobiles peuvent être déterminées à l'aide de plusieurs surfaces de détection élémentaires.

L'environnement 500 est ici une représentation de trois pièces d'un bâtiment, référencées 505-1 à 505-3, représentées dans un plan horizontal. Les traits épais correspondent à des murs. La position et/ou l'orientation d'éléments mobiles peut être déterminées dans chacune des pièces 505-1 à 505-3 à l'aide de surfaces de détection élémentaires regroupées par sous-groupes et par groupe.

Dans un souci de clarté, chaque sous-groupe correspond ici à une pièce. Cependant, selon certains modes de réalisation, une pièce peut comprendre plusieurs sous-groupes et, réciproquement, un sous-groupe peut être associé à plusieurs pièces.

Ainsi, l'environnement 500 comprend ici trois sous-groupes associés chacun à l'une des pièces 505-1 à 505-3 (dans l'exemple illustré, les références 505-1 à 505-3 visent donc indifféremment une pièce ou un sous-groupe), chaque sous-groupe comprenant ici trois surfaces de détection élémentaires.

Ainsi, par exemple, le sous-groupe 505-1 comprend les surfaces de détection élémentaires 510-11 à 510-13. De même, le sous-groupe 505-2 comprend les surfaces de détection élémentaires 510-21 à 510-23 et le sous-groupe 505-3 comprend les surfaces de détection élémentaires 510-31 à 510-33.

Si chaque sous-groupe comprend ici trois surfaces de détection élémentaires, leur nombre peut varier de un à plusieurs dizaines. En outre, le nombre de surfaces de détection élémentaires peut varier d'un sous-groupe à un autre.

Comme illustré, un élément mobile peut passer de la pièce 505-1 à la pièce 505-2 en passant par une ouverture située à la jonction des surfaces de détection 510-13 et 510-22.

Selon un mode de réalisation particulier, chaque sous-groupe comprend une surface de détection élémentaire appelée maître. Les autres surfaces de détection élémentaires du sous-groupe sont des surfaces de détection élémentaires dites esclaves. L'activation séquentielle d'éléments mobiles situés à proximité d'un sous-groupe est effectuée par un module de gestion associé à la surface de détection élémentaire maître de ce sous-groupe.

A titre d'illustration, les surfaces de détection élémentaires maîtres peuvent être les surfaces de détection élémentaires 510-12, 510-21 et 510-31 (comme suggéré par l'utilisation de caractères gras).

Chaque sous-groupe permet la détection d'éléments mobiles situés à proximité du sous-groupe. Ainsi, par exemple, les éléments mobiles situés dans la zone référencée 515-1 peuvent être activés par le module de gestion associé à la surface de détection élémentaire maître du sous-groupe 505-1. De même, les éléments mobiles situés dans la zone référencée 515-2 peuvent être activés par le module de gestion associé à la surface de détection élémentaire maître du sous-groupe 505-2 et les éléments mobiles situés dans la zone référencée 515-3 peuvent être activés par le module de gestion associé à la surface de détection élémentaire maître du sous-groupe 505-3.

Il peut exister des zones dans lesquelles un élément mobile peut être activé par un sous-groupe ou un autre, par exemple la zone 520. Dans cette dernière, un élément mobile peut être activé par le module de gestion associé à la surface de détection élémentaire maître du sous-groupe 505-1 ou par le module de gestion associé à la surface de détection élémentaire maître du sous-groupe 505-2. Selon la position de l'élément mobile dans la zone 520, sa position et/ou son orientation sont déterminées par la surface de détection élémentaire 510-13 ou la surface de détection élémentaire 510-22.

Selon un mode de réalisation particulier, un élément mobile s'inscrit auprès d'un seul module de gestion (associé à une surface de détection élémentaire maître) lorsque sa présence est détectée à proximité de la surface de détection. A ces fins, un mécanisme d'inscription similaire aux mécanismes de connexion présents dans le protocole radio du type connu sous le nom ANT ou ANT+ peut, par exemple, être utilisé.

Selon une version simplifiée de ce mécanisme, un élément mobile qui n'est pas inscrit auprès d'un module de gestion d'une surface de détection élémentaire maître émet une requête susceptible d'être reçue par un ou plusieurs modules de gestion (associés à des surfaces de détection élémentaires maîtres). Lorsque la requête est reçue par plusieurs modules de gestion, une sélection est opérée pour que l'élément mobile ne soit inscrit qu'auprès d'un seul module de gestion d'une surface de détection élémentaire maître.

Chaque module de gestion associé à une surface de détection élémentaire maître d'un sous-groupe gère une liste d'éléments mobiles à activer.

Les sous-groupes comprenant des surfaces de détection élémentaires en contact et permettant le passage d'éléments mobiles d'une surface de détection élémentaire d'un sous-groupe à une autre surface de détection élémentaire d'un autre sous-groupe, ayant des zones d'activation communes, forment des groupes. Ainsi, par exemple, les sous-groupes 505-1 et 505-2 illustrés sur la figure 5 forment un premier groupe tandis que le sous-groupe 505-3 forme un groupe en lui-même.

Lorsqu'un élément mobile est inscrit auprès d'un module de gestion d'une surface de détection élémentaire maître, un lien de communication radio est établi entre l'élément mobile et le module de gestion. Suite à l'établissement de ce lien, une première étape de communication consiste à obtenir un identifiant unique de l'élément mobile, par exemple un identifiant unique codé sur 24 ou 32 bits, puis à transmettre à l'élément mobile une référence de canal de communication qu'il doit utiliser pour recevoir des messages d'activation ainsi que, de préférence, une référence canal radio qu'il doit utiliser pour recevoir d'autres types de messages.

Comme décrit précédemment, l'activation séquentielle des éléments mobiles est gérée par une surface de détection élémentaire maître. Chaque période d'activation, c'est-à-dire chaque période de temps comprenant l'activation d'un élément mobile et la mesure des tensions induites dans les surfaces de détection élémentaires correspondantes est dénommée « *TimeSlot* » (aussi noté T*S*).

L'émission d'un signal radio modulé encodant l'identifiant unique d'un élément mobile, sous forme de message d'activation, par un module de gestion associé à une surface de détection élémentaire maître active un élément mobile unique.

Un tel message est utilisé pour sélectionner un élément mobile unique à activer et pour synchroniser le moment où cet élément mobile doit activer son (premier) solénoïde.

Il est observé ici que la portée radio d'un module de gestion d'une surface de détection élémentaire maître doit couvrir sa propre surface ainsi que les surfaces de détection élémentaires esclaves dépendantes de cette surface de détection élémentaire maître.

Pour synchroniser les modules de détection des surfaces de détection élémentaires esclaves d'un sous-groupe avec celui de la surface de détection élémentaire maître de ce sous-groupe, le module de détection ou le module de gestion de la surface de détection élémentaire maître émet un signal de synchronisation au début de chaque séquence d'activation (c'est-à-dire chaque cycle d'activation de l'ensemble des éléments mobiles d'une liste d'éléments mobile).

Ce signal de synchronisation peut être transmis en utilisant les moyens radios utilisés pour transmettre des messages aux éléments mobiles, notamment des messages d'activation, ou en utilisant d'autres moyens de communication, filaires ou non filaires. Ce signal de synchronisation peut également provenir directement d'une source partagée par tous les modules de détection des surfaces de détection élémentaires d'un même sous-groupe.

A chaque activation (potentielle) d'un élément mobile, c'est-à-dire à chaque étape d'activation d'une séquence d'activation, chaque surface de détection élémentaire d'un même sous-groupe, qu'elle soit maître ou esclave, cherche à détecter la présence d'un élément mobile.

La figure 6 illustre un exemple simplifié de diagramme temporel pour la détermination de la position et/ou l'orientation d'éléments mobiles inscrits auprès d'un module de gestion d'une même surface de détection élémentaire maître, situés à proximité de cette surface de détection élémentaire maître et de surfaces de détection élémentaires esclaves associées à cette dernière, ces surfaces de détection élémentaires appartenant à un même sous-groupe k.

Comme illustré, le temps est divisé en segments correspondant ici à des *TimeSlots*, chaque segment permettant d'activer un élément mobile et de déterminer sa position et/ou son orientation. Il est ainsi possible de déterminer la position et/ou l'orientation d'un élément mobile E(0), puis d'un élément mobile E(1) et ainsi de suite jusqu'à un élément mobile E(n-1) avant de reprendre la séquence pour déterminer à nouveau la position de l'élément mobile E(0).

Plus précisément, à l'instant $t_0$ (ou un peu de temps avant pour tenir compte du temps de synchronisation), un signal de synchronisation ($SS_k$) est émis pour synchroniser toutes les surfaces de détection élémentaires du sous-groupe k. Au même instant ou à un instant proche de celui-ci, un signal d'activation de l'élément mobile E(0), dénoté $S_{k,t0,E(0)}$, est émis. Ainsi, si l'élément mobile E(0) est situé à portée du module de gestion associé à la surface de détection élémentaire maître du sous-groupe k, il émet un champ électromagnétique susceptible de créer, par induction, une tension induite dans des boucles de détection des surfaces de détection élémentaires du sous-groupe k ou, le cas échéant, comme décrit ci-après, dans des boucles de détection de surfaces de détection élémentaires d'autres sous-groupes situés à proximité du sous-groupe k.

A titre d'illustration, des mesures de tensions (Vout) sont effectuées pendant le *TimeSlot 0* pour permettre de déterminer la position et/ou l'orientation de l'élément mobile E(0), comme décrit précédemment, en tenant compte, de préférence, des impédances des boucles de détection. Il est observé ici que si les mesures de tensions (Vout) sont effectuées pendant le *TimeSlot 0,* le calcul de la position et/ou l'orientation de l'élément mobile E(0) peut se poursuivre durant le *TimeSlot* suivant (*TimeSlot* 1), lorsque des mesures de tensions sont effectuées pour permettre de déterminer la position et/ou l'orientation de l'élément mobile E(1), selon un mode connu sous le nom de pipeline.

Après que la position et/ou l'orientation de l'élément mobile E(0) aient été déterminées dans chacune de ces surfaces de détection élémentaires, les positions et/ou orientations ainsi estimées peuvent être consolidées dans un module de calcul de position et/ou d'orientation associé à chacun des sous-groupes concernés, en particulier dans un module de calcul de position et/ou d'orientation associé au sous-groupe k.

De même, à l'instant $t_1$, un signal d'activation $S_{k,t1,E(1)}$ de l'élément mobile E(1) est émis. Ainsi, à nouveau, si l'élément mobile E(1) est situé à portée du module de gestion associé à la surface de détection élémentaire maître du sous-groupe k, il émet un champ électromagnétique susceptible de créer, par induction, une tension induite dans des boucles de détection des surfaces de détection élémentaires du sous-groupe k ou, le cas échéant, dans des boucles de détection de surfaces de détection élémentaires d'autres sous-groupes situés à proximité du sous-groupe k.

De façon similaire, des mesures de tensions (Vout) sont effectuées pendant le *TimeSlot 1* pour permettre de déterminer la position et/ou l'orientation de l'élément mobile E(1) en tenant compte, de préférence, des impédances des boucles de détection. A nouveau, si les mesures de tensions (Vout) sont effectuées pendant le *TimeSlot 1,* le calcul de la position et/ou l'orientation de l'élément mobile E(1) peut se poursuivre durant le *TimeSlot* suivant (*TimeSlot* 2), lorsque des mesures de tensions sont effectuées pour permettre de déterminer la position et/ou l'orientation de l'élément mobile E(2).

Dans cette même période de temps et après que la position et/ou l'orientation de l'élément mobile E(1) aient été déterminées, les positions et/ou orientations ainsi estimées peuvent être consolidées.

Comme illustré, ce processus se répète pour tous les éléments mobiles inscrits auprès du sous-groupe k puis se répète en séquence.

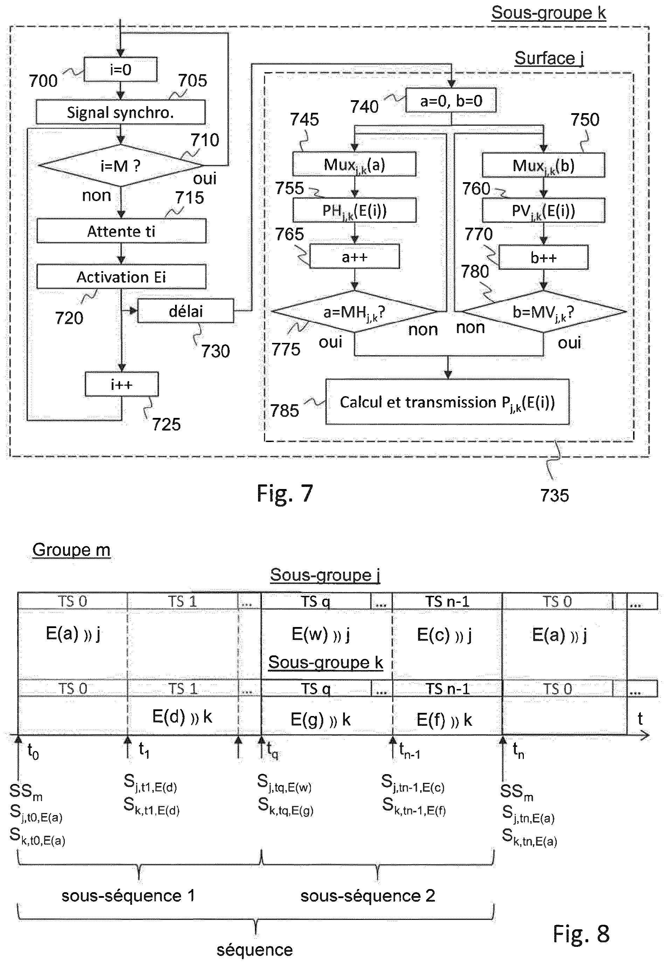

La figure 7 illustre certaines étapes d'un algorithme mis en oeuvre pour déterminer la position d'éléments mobiles situés à proximité de surfaces de détection élémentaires d'un sous-groupe k.

Comme illustré, une première étape vise à initialiser une variable i, représentant un index sur les éléments mobiles inscrits auprès du module de gestion de la surface de détection élémentaire maître du sous-groupe k, à la valeur zéro (étape 700).

Un signal de synchronisation est alors émis pour synchroniser toutes les surfaces de détection élémentaires du sous-groupe k (étape 705).

Un test est ensuite effectué pour déterminer si la variable i est égale à la constante M qui représente le nombre d'éléments mobiles inscrits auprès du module de gestion de la surface de détection élémentaire maître du sous-groupe k (étape 710).

Si la valeur de la variable i est égale à la constante M, l'algorithme reboucle à l'étape d'initialisation de la variable i (étape 700), à moins qu'il ne soit mis fin à l'algorithme.

Si, au contraire, la valeur de la variable i n'est pas égale à la constante M, un temporisateur (ou *timer*) est déclenché pour attendre l'instant ti auquel un signal d'activation de l'élément mobile i peut être émis (étape 715).

A l'instant ti, un signal d'activation de l'élément mobile E(i) ayant l'index i est émis (étape 720). Ce signal d'activation comprend typiquement un identifiant unique de l'élément mobile à activer.

La variable i est ensuite incrémentée de un (étape 725) et l'algorithme reboucle à l'étape 710.

Après l'émission d'un signal d'activation de l'élément mobile E(i) et après un délai (730) d'activation de cet élément mobile, les modules de détection et de localisation associés à chaque surface de détection élémentaires du sous-groupe k déterminent la position et/ou l'orientation de l'élément mobile activé, de façon autonome. Les étapes suivantes, référencées 735, sont ainsi mises en oeuvre dans chacun de ces modules et, en particulier, dans un module associé à la surface de détection élémentaire référencée j.

Suite à l'activation d'un élément mobile, c'est-à-dire suite à la réception d'un signal de synchronisation ou selon un séquencement prédéterminé synchronisé sur un signal de synchronisation précédemment reçu, des variables a et b, représentant des index relatifs aux boucles de détection horizontales et verticales, respectivement, de la surface de détection élémentaire j, sont initialisées à la valeur zéro (étape 740).

Les multiplexeurs de la surface de détection élémentaire j (du sous-groupe k) sont alors configurés pour sélectionner la boucle de détection horizontale ayant pour index a (étape 745) et la boucle de détection verticale ayant pour index b (étape 750).

Une mesure des tensions générées dans chacune des boucles sélectionnées est alors effectuée (étapes 755 et 760). Ces valeurs sont mémorisées et les variables a et b sont incrémentées de un (étapes 765 et 770). Un test est ensuite effectué pour déterminer si les valeurs des variables a et b sont égales à $MH_{j,k}$ et $MV_{j,k}$, respectivement, c'est-à-dire pour déterminer si toutes les boucles de détection horizontales et verticales ont été sélectionnées (étapes 775 et 780). Les valeurs $MH_{j,k}$ et $MV_{j,k}$, représentent ici le nombre de boucles de détection horizontales et le nombre de boucles de détection verticales, respectivement, de la surface de détection élémentaire j du sous-groupe k.

Si toutes les boucles de détection horizontales et verticales n'ont pas été sélectionnées, les étapes 745, 755, 765 et 775 et/ou les étapes 750, 760, 770 et 780 sont répétées jusqu'à ce que toutes les boucles de détection horizontales et verticales aient été sélectionnées et que les mesures de tension correspondantes aient été effectuées.

Lorsque toutes les boucles de détection horizontales et verticales ont été sélectionnées, un calcul est effectué pour déterminer, le cas échéant, la position $P_{j,k}(E(i))$ et/ou l'orientation de l'élément mobile sélectionné E(i) sur la surface de détection élémentaire j du sous-groupe k (étape 785). Cette position peut être transmise à différents dispositifs, par exemple à l'élément mobile E(i) lui-même et/ou à un module de calcul d'une surface de détection élémentaire maître afin, par exemple, que les positions déterminées par chacune des surfaces de détection élémentaires du sous-groupe k soient consolidées pour déterminer la position $P_k(E(i))$ de l'élément mobile sélectionné. Cette position peut en outre être transmise à une application ou un système utilisant cette position.

Il est observé ici que selon des modes de réalisation particuliers, les surfaces de détection élémentaires ne se chevauchent pas. Dans ce cas, seules des boucles de détection d'une seule surface de détection élémentaire sont excitées par l'élément mobile activé (l'utilisation de seuils permet à chaque module de calcul de position et/ou d'orientation de déterminer si l'élément mobile activé est à proximité ou non).

Les étapes 700 à 725 sont donc uniques pour toutes les surfaces de détection élémentaires du sous-groupe k tandis que les étapes 740 à 785 sont mises en oeuvre dans chacune de ces surfaces de détection élémentaires.

La figure 8 illustre un exemple simplifié de diagramme temporel pour la détermination de la position et/ou l'orientation d'éléments mobiles inscrits auprès de modules de gestion de surfaces de détection élémentaires maîtres d'un même groupe.

Le diagramme illustré vise un groupe m comprenant deux sous-groupes j et k, par exemple les sous-groupes 505-1 et 505-2 illustrés sur la figure 5.

Comme en ce qui concerne le diagramme temporel illustré sur la figure 6, le temps est divisé en *TimeSlots,* chaque *TimeSlot* correspondant à une période de temps permettant d'activer un élément mobile et d'effectuer les mesures de tensions permettant de déterminer sa position (et/ou son orientation).

La période de temps correspond une séquence complète d'interrogation des éléments mobiles est ici divisée en deux périodes élémentaires appelées sous-séquences.

Selon des modes de réalisation particuliers, durant la première sous-séquence, au début de chaque *TimeSlot,* des modules de gestion associés à des surfaces de détection élémentaires maîtres des sous-groupes concernés émettent simultanément des messages d'activation vers le même élément mobile. Durant la seconde sous-séquence, les modules de gestion associés aux surfaces de détection élémentaires maîtres du groupe concerné émettent simultanément, au début de chaque *TimeSlot,* des messages d'activation vers des éléments mobiles inscrits exclusivement dans leur sous-groupe.

Ainsi, selon ces modes de réalisation, à l'instant $t_0$, au début de la première sous-séquence, ou peu de temps avant, un signal de synchronisation ($SS_m$) est émis pour synchroniser toutes les surfaces de détection élémentaires des sous-groupes du groupe m, notamment des sous-groupes j et k. Au même instant ou à un instant proche de celui-ci, des signaux d'activation Sj,t0,E(a) et Sk,t0,E(a) sont émis par les modules de gestion des surfaces de détection élémentaires maîtres des sous-groupes j et k, respectivement, pour activer l'élément mobile E(a). Ainsi, si l'élément mobile E(a) est situé à proximité de l'un de ces modules, il peut émettre un champ électromagnétique susceptible de créer, par induction, une tension induite dans les boucles de détection des surfaces de détection élémentaires du groupe m.

La mesure des tensions Vout produites par l'élément mobile E(a) est alors effectuée durant le *TimeSlot 0* (*TS 0*), dans chacune de ces surfaces de détection élémentaires comme décrit précédemment, en tenant compte, de préférence, des impédances des boucles de détection. Dans cette même période de temps ou dans une période de temps suivante, la position et/ou l'orientation de l'élément mobile E(a) sont déterminées par ces surfaces de détection élémentaires. Comme illustré avec la référence E(a) )) j, la position de l'élément mobile E(a) est ici déterminée par le sous-groupe j (aucune position d'élément mobile n'est détectée par le sous-groupe k).

De même, à l'instant $t_1$, des signaux d'activation Sj,t1,E(d) et Sk,t1,E(d) sont émis par les modules de gestion des surfaces de détection élémentaires maîtres des sous-groupes j et k, respectivement, pour activer le module E(d).

Ainsi, à nouveau, si l'élément mobile E(d) est situé à proximité de l'un de ces modules, il émet un champ électromagnétique susceptible de créer, par induction, une tension induite dans les boucles de détection des surfaces de détection élémentaires du groupe m.

A nouveau, une mesure des tensions Vout produites par l'élément mobile E(a) est effectuée durant le *TimeSlot 1 (TS* 1) pour permettre la détermination de la position et/ou l'orientation de l'élément mobile E(d) durant ce *TimeSlot* ou ultérieurement..La position et/ou l'orientation de l'élément mobile E(d) peut ensuite être consolidée. Comme illustré avec la référence E(d) )) k, la position de l'élément mobile E(d) est ici déterminée par le sous-groupe k (aucune position d'élément mobile n'est détectée par le sous-groupe j).

A l'instant $t_q$, correspondant ici au début de la seconde sous-séquence, des signaux d'activation différents Sj,tq,E(w) et Sk,tq,E(g) sont émis par les modules de gestion des surfaces de détection élémentaires maîtres des sous-groupes j et k, respectivement. Ainsi, le module de gestion de la surface de détection élémentaire maître du sous-groupe j active l'élément mobile E(w) tandis que le module de gestion de la surface de détection élémentaire maître du sous-groupe k active l'élément mobile E(g).

Ainsi, comme illustré avec la référence E(w) )) j, si l'élément mobile E(w) est situé à proximité du module de gestion associé à la surface de détection élémentaire maître du sous-groupe j, il émet un champ électromagnétique susceptible de créer, par induction, une tension induite dans des boucles de détection des surfaces de détection élémentaires du groupe m, ici du sous-groupe j. De même, comme illustré avec la référence E(g) )) k, si l'élément mobile E(g) est situé à proximité du module de gestion associé à la surface de détection élémentaire maître du sous-groupe k, il émet un champ électromagnétique susceptible de créer, par induction, une tension induite dans les boucles de détection des surfaces de détection élémentaires du groupe m, ici du sous-groupe k.

La position et/ou l'orientation des éléments mobiles E(w) et E(g) sont déterminées durant le *TimeSlot q* (*TS q*) et, éventuellement, pendant une portion du *TimeSlot* suivant (*TS q+1*).

Ce processus se répète pour tous les éléments mobiles inscrits auprès des sous-groupes du groupe m puis se répète en séquence.

Selon des modes de réalisation particuliers, la gestion des *TimeSlots* des premières sous-séquences est effectuée par un module de gestion associé à chaque groupe comprenant plusieurs sous-groupes. Ce module de gestion peut notamment être le module de gestion associé à la surface de détection élémentaire maître d'un des sous-groupes du groupe concerné. La gestion des *TimeSlots* des secondes sous-séquences peut être effectuée directement par les modules de gestion des surfaces de détection élémentaires maîtres.

Il est observé ici que, selon des modes de réalisation particuliers, les messages d'activation d'un élément mobile par plusieurs sous-groupes distincts d'un même groupe, durant la première sous-séquence, peuvent être émis simultanément. Ces signaux peuvent être émis sur un même canal.

Alternativement, les messages d'activation peuvent être transmis sur des canaux différents, les éléments mobiles étant alors paramétrés, durant une phase d'enregistrement, pour écouter les messages d'activation correspondant aux signaux reçus les plus forts.

Alternativement encore, les messages d'activation peuvent être transmis sur des canaux différents, les éléments mobiles étant alors paramétrés, durant une phase d'enregistrement, pour sélectionner un canal et écouter les messages d'activation correspondant en fonction de la position relative de l'élément mobile et des sous-groupes, par exemple en choisissant un sous-groupe en minimisant cette distance relative.

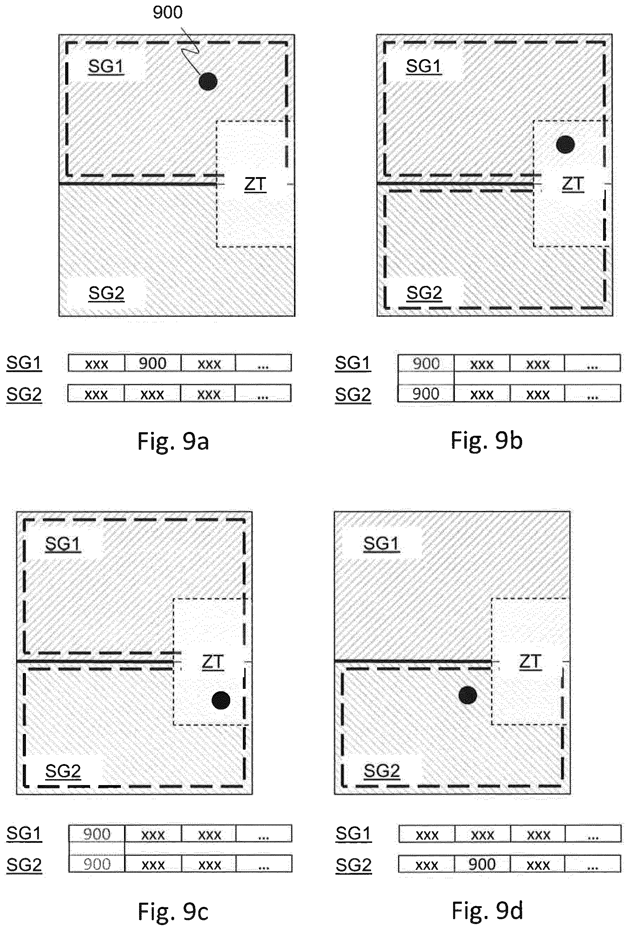

La figure 9, comprenant les figures 9a à 9d, illustre un exemple de gestion de *TimeSlots* et d'inscription d'un élément mobile dont la position peut être déterminée par des surfaces de détections élémentaires de deux sous-groupes d'un même groupe.

Comme illustré sur la figure 9a, l'environnement de détection comprend ici une première surface de détection élémentaire d'un premier sous-groupe (SG1) et une seconde surface de détection élémentaire d'un second sous-groupe (SG2). Un élément mobile 900 peut se déplacer de la première surface de détection élémentaire à la seconde via une zone de transition (ZT) et inversement.

A titre d'illustration, il est admis ici que l'élément mobile 900 n'est initialement inscrit qu'auprès du module de gestion associé à la surface de détection élémentaire maître du sous-groupe SG1. Par conséquent, l'élément mobile 900 peut être activé par le module de gestion associé à la surface de détection élémentaire maître du sous-groupe SG1 (comme représenté par le rectangle en trait gras pointillé).

Ainsi, lorsque le module de gestion associé à la surface de détection élémentaire maître du sous-groupe SG1 active séquentiellement les éléments mobiles inscrits auprès de lui, il interroge tout d'abord, le cas échéant, les éléments mobiles enregistrés auprès de plusieurs modules de gestion associés à des surfaces de détection maîtres (première sous-séquence) puis les éléments mobiles uniquement enregistrés auprès du module de gestion associé à la surface de détection élémentaire maître du sous-groupe SG1, dont l'élément mobile 900, comme illustré sur la figure 9a, sous la représentation des sous-groupes SG1 et SG2, sous forme de diagramme temporel des *TimeSlots.*

Lorsque l'élément mobile 900 se déplace dans la zone SG1 pour entrer dans la zone de transition ZT, comme illustré sur la figure 9b, l'obtention de sa position permet de déterminer qu'il se trouve dans la zone de transition ZT entre les sous-groupes SG1 et SG2 (cette zone de transition étant typiquement déterminée durant une étape de configuration). Cette information est adressée au module de gestion associé à la surface de détection élémentaire maître du sous-groupe SG2 qui inscrit l'élément mobile 900 sur sa liste. L'élément mobile 900 étant inscrit auprès de deux sous-groupes du même groupe, un *TimeSlot* spécifique est assigné à cet élément mobile dans la première sous-séquence des séquences d'activation des sous-groupes SG1 et SG2.

Ainsi, les modules de gestion associés aux surfaces de détection élémentaires maîtres des sous-groupes SG1 et SG2 tentent d'activer l'élément mobile 900 en même temps, comme illustré sur la figure 9b, sous la représentation des sous-groupes SG1 et SG2. La position de l'élément mobile 900 est ici toujours déterminée par la surface de détection élémentaire maître du sous-groupe SG1.

Lorsque l'élément mobile 900 se déplace de la zone référencée SG1 vers la zone référencée SG2, tout en restant dans la zone de transition ZT, comme illustré sur la figure 9c, il continu à être activé par les modules de gestion associés aux surfaces de détection élémentaires maîtres des sous-groupes SG1 et SG2. Cependant, la position de l'élément mobile 900 est maintenant déterminée par la surface de détection élémentaire maître du sous-groupe SG2.

Enfin, comme illustré sur la figure 9d, l'élément mobile 900 quitte la zone de transition ZT, en restant dans la zone SG2. La position et/ou l'orientation de l'élément mobile 900 sont alors toujours déterminées par la surface de détection élémentaire maître du sous-groupe SG2 après que cet élément mobile ait été activé.

L'information selon laquelle l'élément mobile 900 quitte la zone de transition est ici transmise au module de gestion associé à la surface de détection élémentaire maître du sous-groupe SG1 qui a activé cet élément mobile mais n'a pas déterminé sa position. Le module de gestion associé à la surface de détection élémentaire maître du sous-groupe SG1 décide alors de le retirer de sa liste d'éléments mobiles à activer.

L'élément mobile 900 n'étant alors inscrit qu'auprès d'un module de gestion d'une seule surface de détection élémentaire maître, le *TimeSlot* qui lui est associé est modifié : un *TimeSlot* standard, propre au sous-groupe SG2 lui est assigné (dans la seconde sous-séquence de la séquence d'activation du sous-groupe SG2), comme illustré sur la figure 9d, sous la représentation des sous-groupes SG1 et SG2.

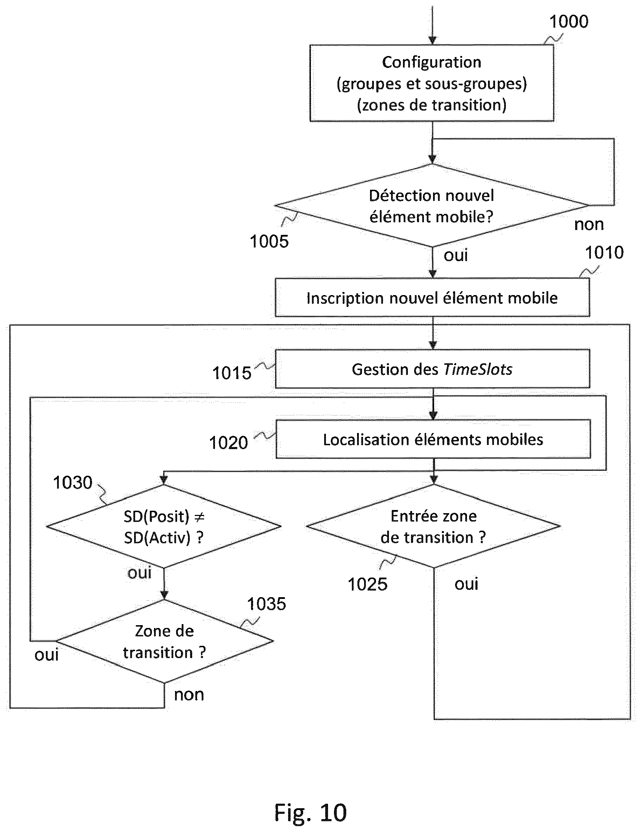

La figure 10 illustre des étapes d'un algorithme pour gérer les inscriptions d'éléments mobiles auprès de modules de gestion de sous-groupes de surfaces de détection élémentaires.

Une première étape (étape 1000) a ici pour objet de configurer le système, en particulier pour déterminer les sous-groupes et les groupes ainsi que pour déterminer les zones de transition. Selon un mode de réalisation particulier, un repère commun est déterminé, au moins par groupe, afin de simplifier la gestion des positions des éléments mobiles, notamment par rapport aux zones de transition.

Dans une étape suivante (étape 1005), il est déterminé si des requêtes d'inscription sont reçues d'un ou plusieurs éléments mobiles. Cette étape est, de préférence, effectuée de façon continue, en tâche de fond, pour permettre l'inscription de nouveaux éléments mobiles.

Si au moins un élément mobile est détecté, il est inscrit auprès d'un module de gestion associé à la surface de détection élémentaire maître d'un sous-groupe (étape 1010). Comme décrit précédemment, cette phase d'inscription initiale peut être effectuée de façon standard, par exemple à l'aide du mécanisme de connexion présent dans le protocole radio du type connu sous le nom ANT ou ANT+.

Dans une étape suivante, les *TimeSlots* permettant d'activer séquentiellement chaque élément mobile, au sein de chaque sous-groupe, sont déterminés (étape 1015).

A ces fins, les éléments mobiles inscrits auprès de modules de gestion associés à des surfaces de détection élémentaires maîtres de sous-groupes d'un même groupe sont identifiés afin de permettre la réservation de *TimeSlots* correspondants pour chacun des sous-groupes concernés.

Ainsi, par exemple, un élément mobile inscrit auprès de modules de gestion associés aux surfaces de détection élémentaires maîtres de sous-groupes SG1 et SG2 d'un même groupe se verront définir des *TimeSlots* équivalents (c'est-à-dire ayant un même instant de début) dans les modules de gestion associés aux surfaces de détection élémentaires maîtres des sous-groupes SG1 et SG2. Ces TimeSlots sont définis dans la première sous-séquence des séquences correspondantes.

Des *TimeSlots* propres à chaque module de gestion sont ensuite attribués aux éléments mobiles inscrits auprès d'un seul module de gestion (associé à une seule surface de détection élémentaire maître).

Après que des *TimeSlots* aient été définis, il est possible d'activer séquentiellement les éléments mobiles inscrits afin de déterminer leur position et/ou orientation (étape 1020) comme décrit précédemment.

Lorsque la position d'un élément mobile est déterminée (ou après avoir déterminé la position de plusieurs éléments mobiles, par exemple tous les éléments mobiles inscrits auprès d'un sous-groupe), le ou les éléments mobiles étant entrés dans une zone de transition sont, le cas échéant, identifiés (étape 10205) en comparant leur position avec les emplacements des zones de transition.

Pour chaque élément mobile entré dans une zone de transition, un message est adressé aux modules de gestion associés aux surfaces de détection élémentaires maîtres des sous-groupes dont des surfaces de détection élémentaires chevauchent la zone de transition considérée. Un *TimeSlot* spécifique est alors créé pour que ces modules de gestion activent simultanément chacun de ces éléments mobiles, comme décrit en référence à la figure 9b.

A ces fins, l'algorithme boucle sur l'étape 1015 de gestion des *TimeSlots.*

En outre, lorsque la position d'un élément mobile est déterminée (ou après avoir déterminé la position de plusieurs éléments mobiles, par exemple tous les éléments mobiles inscrits auprès d'un sous-groupe), un test est effectué pour déterminer si, pour ce ou ces éléments mobiles, la surface de détection élémentaire maître dont le module de gestion a activé le ou les éléments mobiles (pour chacune de ces surfaces) est la même que la surface de détection élémentaire maître qui a permis de déterminer la position de ce ou ces éléments mobiles (étape 1030).

Dans l'affirmative et lorsque l'élément mobile concerné ne se trouve pas dans une zone de transition (étape 1035), un message est adressé aux modules de gestion associés aux surfaces de détection élémentaires maîtres ayant activé le ou les éléments mobiles concernés afin que le ou les éléments mobiles soient retirés de certaines liste et que les *TimeSlots* soient, le cas échéant, redéfinis. Si le ou les éléments mobiles concernés ne sont, après cette opération, inscrits que sur une seule liste, des *TimeSlots* propres aux sous-groupes concernés sont alors attribués à ce ou ces éléments mobiles, comme décrit en référence à la figure 9d.

A ces fins, l'algorithme boucle sur l'étape 1015 de gestion des *TimeSlots.*

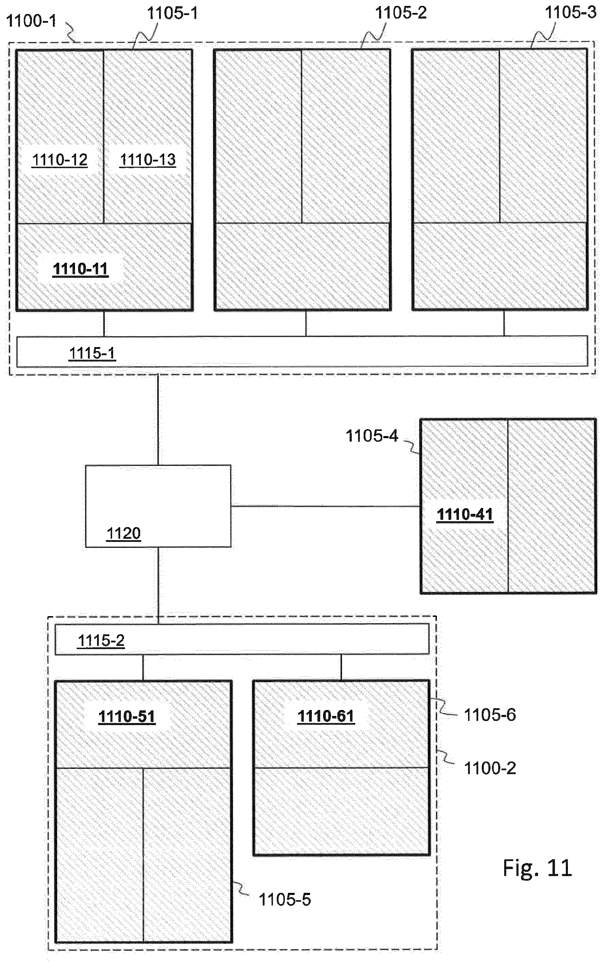

La figure 11 illustre un exemple d'architecture logique d'un système pour déterminer la position et/ou l'orientation d'éléments mobiles placés à proximité d'une surface de détection comprenant plusieurs surfaces de détection élémentaires organisées par sous-groupes et groupes.

Comme illustré, la surface de détection comprend ici trois groupes de surfaces de détection élémentaires.

Le premier groupe, référencé 1100-1, comprend trois sous-groupes référencés 1105-1 à 1105-3. Chacun de ces sous-groupes comprend ici trois surfaces de détection élémentaires parmi lesquelles une surface de détection élémentaire maître et deux surfaces de détection élémentaires esclaves. A titre d'illustration, le sous-groupe 1105-1 comprend la surface de détection élémentaire maître 1110-11 ainsi que les surfaces de détection élémentaires esclaves 1110-12 et 1110-13.

Le sous-groupe 1105-4, comprenant deux surfaces de détection élémentaires dont la surface de détection élémentaire maître 1110-41, constitue un groupe à lui seul.

Par ailleurs, le groupe référencé 1100-2 comprend deux sous-groupes référencés 1105-5 à 1105-6, le sous-groupe 1105-5 comprenant ici trois surfaces de détection élémentaires et le sous-groupe 1105-6 en en comprenant deux, dont les surfaces de détection élémentaires maîtres 1110-51 et 1110-61, respectivement.

Un module est associé à chaque groupe comprenant plus d'un sous-groupe pour gérer, notamment, les *TimeSlots.* Ainsi, le module 1115-1 est associé au groupe 1100-1 et le module 1115-2 est associé au groupe 1100-2. Il est observé ici qu'un tel module peut être intégré dans le module de gestion associé à la surface de détection élémentaire maître d'un des sous-groupes du groupe considéré.

Les modules 1115-1 et 1115-2 permettent en outre de consolider des positions et/ou orientations déterminées au sein des sous-groupes du groupe considéré.

Enfin, un module central référencé 1120 permet de contrôler le système, en particulier de centraliser les positions et/ou orientations déterminées pour chacun des éléments mobiles détectés.

Ce module central peut être intégré dans un module associé à un groupe ou dans un module de gestion associé à une surface de détection élémentaire maître.

Le module central et les modules associés aux groupes sont utilisés, en particulier, pour gérer les *TimeSlots.*

Ainsi, par exemple, lorsqu'un module de gestion associé à une surface de détection élémentaire maître reçoit des signaux de localisation d'un élément mobile et si ce module de gestion n'a réservé aucun *TimeSlot* pour cet élément mobile, il l'indique au module du groupe auquel il appartient. Cette indication comprend, de préférence, la position de l'élément mobile et un identifiant unique du sous-groupe ayant déterminé la position de cet élément mobile.

Le module associé au groupe communique alors cette information au module de gestion de la surface de détection élémentaire maître qui a attribué un *TimeSlot* à cet élément mobile. Selon que la position de l'élément mobile se situe dans une zone de transition ou non, un *TimeSlot* commun, dans la première sous-séquence, est attribué par le module de gestion associé à la surface de détection élémentaire maître qui a reçu des signaux de localisation de l'élément mobile et par le module de gestion de la surface de détection élémentaire maître qui avait attribué un *TimeSlot* à cet élément mobile ou, alternativement, le module de gestion de la surface de détection élémentaire maître qui avait attribué un *TimeSlot* à cet élément mobile libère ce *TimeSlot* pour l'attribuer plus tard à un autre élément mobile.

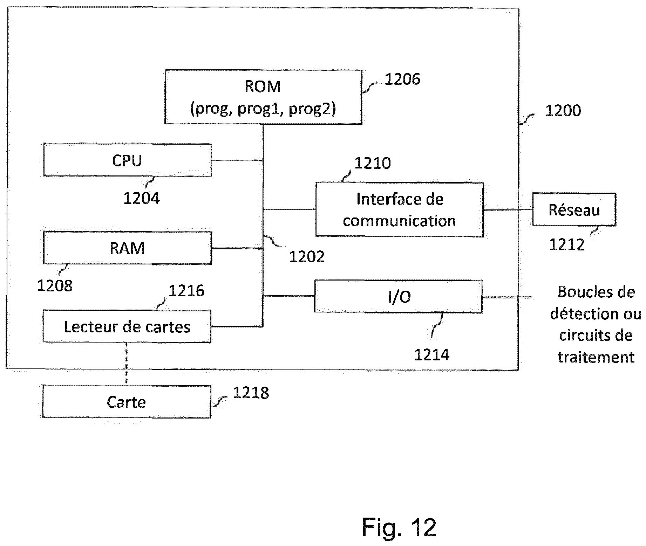

La figure 12 illustre un exemple d'architecture d'un module central ou d'un module pouvant être associé à une surface de détection élémentaire maître ou à un groupe.

Le dispositif 1200 comporte de préférence un bus de communication 1202 auquel sont reliés :

- une unité centrale de traitement ou microprocesseur 1204 (CPU, sigle de *Central Processing Unit* en terminologie anglo-saxonne) ;
- une mémoire morte 1206 (ROM, acronyme de *Read Only Memory* en terminologie anglo-saxonne) pouvant comporter un système d'exploitation et des programmes tels que "Prog" ;

- une mémoire vive ou mémoire cache 1208 (RAM, acronyme de *Random Access Memory* en terminologie anglo-saxonne) comportant des registres adaptés à enregistrer des variables et paramètres créés et modifiés au cours de l'exécution des programmes précités ; et
- une interface de communication 1210 reliée à un réseau de communication distribué 1212, par exemple un réseau de communication sans fil et/ou un réseau de communication local, l'interface étant apte à transmettre et à recevoir des données, notamment vers ou depuis un autre module et/ou vers ou depuis un ordinateur, une tablette ou un téléphone intelligent (smartphone). L'interface de communication 1210 peut également permettre, lorsque le dispositif 1200 est utilisé comme module de gestion associé à une surface de détection élémentaire maître, d'activer des éléments mobiles.

Optionnellement, le dispositif 1200 peut également disposer des éléments suivants :

- une interface d'entrée/sortie 1214 permettant de recevoir des données issues de boucles de détection ou de circuits de traitement de mesures de boucles de détection ; et/ou
- un lecteur 1216 de support amovible de stockage 1218 tel qu'une carte mémoire.

Le bus de communication permet la communication et l'interopérabilité entre les différents éléments inclus dans le dispositif 1200 ou reliés à lui. La représentation du bus n'est pas limitative et, notamment, l'unité centrale est susceptible de communiquer des instructions à tout élément du dispositif 1200 directement ou par l'intermédiaire d'un autre élément du dispositif 1200.

Le code exécutable de chaque programme permettant à l'appareil programmable de mettre en oeuvre les processus selon l'invention, en particulier pour gérer des *TimeSlots* et/ou déterminer des positions d'éléments mobiles, peut être stocké, par exemple, dans la mémoire morte 1206.

Selon une variante, le code exécutable des programmes pourra être reçu par l'intermédiaire du réseau de communication 1212, via l'interface 1210, pour être stocké de façon identique à celle décrite précédemment.

De manière plus générale, le ou les programmes pourront être chargés dans un des moyens de stockage du dispositif 1200 avant d'être exécutés.

L'unité centrale 1204 va commander et diriger l'exécution des instructions ou portions de code logiciel du ou des programmes selon l'invention, instructions qui sont stockées, par exemple, dans la mémoire morte 1206 ou bien dans les autres éléments de stockage précités. Lors de la mise sous tension, le ou les programmes qui sont stockés dans une mémoire non volatile, par exemple la mémoire morte 1206, sont transférés dans la mémoire vive 1208 qui contient alors le code exécutable du ou des programmes selon l'invention, ainsi que des registres pour mémoriser les variables et paramètres nécessaires à la mise en oeuvre de l'invention.

Naturellement, pour satisfaire des besoins spécifiques, une personne compétente dans le domaine de l'invention pourra appliquer des modifications dans la description précédente. La présente invention ne se limite pas aux formes de réalisation décrites, d'autres variantes et combinaisons de caractéristiques sont possibles.

La présente invention a été décrite et illustrée dans la présente description détaillée en référence aux figures jointes. Toutefois, la présente invention ne se limite pas aux formes de réalisation présentées. D'autres variantes et modes de réalisation peuvent être déduits et mis en oeuvre par la personne compétente dans le domaine de l'invention à la lecture de la présente description et des figures annexées.

Dans les revendications, le terme « comporter » n'exclut pas d'autres éléments ou d'autres étapes. L'article indéfini « un » n'exclut pas le pluriel. Un seul processeur ou plusieurs autres unités peuvent être utilisées pour mettre en oeuvre l'invention. Les différentes caractéristiques présentées et/ou revendiquées peuvent être avantageusement combinées. Leur présence dans la description ou dans des revendications dépendantes différentes n'exclut pas, en effet, la possibilité de les combiner. Les signes de référence ne sauraient être compris comme limitant la portée de l'invention.

ANNEXES

Table 1 : impédances des boucles d'un sous-système k d'une surface de détection comprenant $M$ surfaces de détection élémentaires, une surface de détection élémentaire $i$ comprenant $Ni$ boucles de détection.

| Sous-groupe $k$ | | |
|---|---|---|
| Index surfaces élémentaires | Index boucles | Impédance ($\Omega$) |
| 1 | 1 | 520 |

(suite)

| Sous-groupe $k$ | | |
|---|---|---|
| Index surfaces élémentaires | Index boucles | Impédance ($\Omega$) |
| 1 | 2 | 600 |
| ... | ... | |
| 1 | 1 | 480 |
| ... | ... | ... |
| 1 | N1 | 550 |
| 2 | 1 | 610 |
| 2 | 2 | 530 |
| ... | ... | ... |
| 2 | N2 | 500 |
| ... | ... | ... |
| j | 1 | 570 |
| ... | ... | ... |
| M | 1 | 490 |
| ... | ... | ... |
| M | Nm | 515 |

## Revendications

**1.** Procédé de contrôle dans un système comprenant une surface de détection interfaçant une pluralité d'éléments mobiles avec un système informatique, la surface de détection comprenant une pluralité de surfaces de détection élémentaires (1110-11, 1110-12, 1110-13), les surfaces de détection élémentaires formant au moins un groupe (1100-1) comprenant plusieurs sous-groupes (1105-1, 1105-2, 1105-3), chaque sous-groupe comprenant au moins une surface de détection élémentaire, chaque surface de détection élémentaire étant configurée pour déterminer une position d'un élément mobile, chaque élément mobile de la pluralité d'éléments mobiles pouvant être activé par un module de gestion associé à un sous-groupe, le procédé comprenant les étapes suivantes, pour au moins un sous-groupe,

- inscription (1010) d'au moins un élément mobile auprès du module de gestion du au moins un sous-groupe, le au moins un élément mobile étant inscrit dans une liste de références d'éléments mobiles ;
- réservation (1015) d'une période de temps différente pour chaque élément mobile référencés dans la liste de référence, ladite période de temps permettant l'activation d'un élément mobile et la détermination d'une position d'un élément mobile activé, les périodes de temps réservées formant une séquence permettant une activation séquentielle des éléments mobiles inscrits auprès du module de gestion dudit au moins un sous-groupe ;

au moins un élément mobile étant inscrit auprès de modules de gestion d'au moins deux sous-groupes différents, la période de temps réservée pour ledit au moins un élément mobile inscrit auprès de modules de gestion d'au moins deux sous-groupes différents étant la même dans chacun desdits au moins deux sous-groupes.

**2.** Procédé selon la revendication 1 comprenant en outre une étape de comparaison d'une position d'un élément mobile avec une zone prédéterminée et, en réponse à la comparaison, une étape de modification d'au moins une période de temps réservée pour l'élément mobile dont la position est comparée avec une zone prédéterminée.

**3.** Procédé selon la revendication 2 selon lequel ladite étape de modification d'au moins une période de temps réservée comprend la réservation d'une nouvelle période de temps pour l'élément mobile dont la position est comparée avec une zone prédéterminée, la nouvelle période de temps étant la même qu'une autre période de temps précédemment réservée pour l'élément mobile dont la position est comparée avec une zone prédéterminée, la nouvelle période de temps et l'autre période de temps étant réservées dans des modules de gestion de sous-groupes différents.

**4.** Procédé selon la revendication 2 selon lequel ladite étape de modification d'au moins une période de temps réservée comprend la suppression d'une période de temps précédemment réservée pour l'élément mobile dont la position est comparée avec une zone prédéterminée.

**5.** Procédé selon l'une quelconque des revendications 2 à 4 selon lequel la zone prédéterminée est une zone comprenant une partie d'une première surface de détection élémentaire d'un premier sous-groupe et une partie d'une seconde surface de détection élémentaire d'un second sous-groupe différent du premier sous-groupe.

**6.** Procédé selon l'une quelconque des revendications 1 à 5 comprenant en outre une étape de synchronisation de modules de calcul de position associés à chaque surface de détection élémentaire d'un sous-groupe.

**7.** Procédé selon l'une quelconque des revendications 1 à 6 comprenant en outre une étape d'activation d'un élément mobile et une étape de détermination d'une position d'un élément mobile activé, les étapes d'activation et de détermination étant effectuées selon ladite séquence.

**8.** Procédé selon la revendication 7 selon lequel l'étape de détermination d'une position d'un élément mobile activé comprend une étape de mesure d'une tension en sortie d'un circuit de traitement connecté à chaque boucle de détection d'une pluralité de boucles de détection d'une surface de détection élémentaire, une étape d'obtention d'une impédance de chacune des boucles de détection de la pluralité des boucles de détection et une étape de calcul d'une tension induite aux bornes de chacune des boucles de détection de la pluralité des boucles de détection en fonction des impédances obtenues et de mesures de tension.

**9.** Procédé selon l'une quelconque des revendications 1 à 8 selon lequel un élément mobile est activé par un signal radio comprenant un identifiant unique d'un élément mobile à activer.

**10.** Procédé selon l'une quelconque des revendications 1 à 9 comprenant en outre une étape de détermination de la position d'un élément mobile précédemment activé et une étape de transmission de la position déterminée audit élément mobile précédemment activé.

**11.** Surface de détection pour interfacer une pluralité d'éléments mobiles avec un système informatique, la surface de détection comprenant une pluralité de surfaces de détection élémentaires (1110-11, 1110-12, 1110-13), les surfaces de détection élémentaires formant au moins un groupe (1100-1) comprenant plusieurs sous-groupes (1105-1, 1105-2, 1105-3), chaque sous-groupe comprenant au moins une surface de détection élémentaire, chaque surface de détection élémentaire étant configurée pour déterminer une position d'un élément mobile, chaque élément mobile de la pluralité d'éléments mobiles pouvant être activé par un module de gestion associé à un sous-groupe, chaque module de gestion associé à un sous-groupe étant configuré pour :

- inscrire (1010) au moins un élément mobile dans une liste de références d'éléments mobiles ;
- réserver (1015) une période de temps différente pour chaque élément mobile référencés dans la liste de référence, ladite période de temps permettant l'activation d'un élément mobile et la détermination d'une position d'un élément mobile activé, les périodes de temps réservées formant une séquence permettant une activation séquentielle des éléments mobiles inscrits auprès du module de gestion dudit au moins un sous-groupe ;

des modules de gestion associés à des sous-groupes étant en outre configurés pour qu'une même période de temps soit réservée pour un même élément mobile inscrit auprès de plusieurs modules de gestion d'au moins deux sous-groupes différents.

**12.** Surface de détection selon la revendication 11 selon laquelle au moins une surface de détection élémentaire comprend une pluralité de boucles de détection et selon laquelle un module de calcul de position est associé à la au moins une surface de détection élémentaire, le module de calcul de position étant configuré pour obtenir une impédance pour chacun des boucles de détection élémentaire et pour calculer une tension induite aux bornes de chacune des boucles de détection de la pluralité des boucles de détection en fonction des impédances obtenues.

**13.** Surface de détection selon la revendication 11 ou la revendication 12 selon laquelle un module de gestion associé à un sous-groupe est en outre configuré pour activer un élément mobile par un signal radio comprenant un identifiant unique d'un élément mobile à activer.

**EP 3 187 989 B1**

**Patentansprüche**

1. Verfahren zur Steuerung in einem System, umfassend eine Detektionsfläche, die eine Mehrzahl von beweglichen Elementen mit einem Computersystem koppelt, wobei die Detektionsfläche eine Mehrzahl von elementaren Detektionsflächen (1110-11, 1110-12, 1110-13) umfasst, wobei die Mehrzahl von elementaren Detektionsflächen mindestens eine Gruppe (1100-1) bildet, die mehrere Untergruppen (1105-1, 1105-2, 1105-3) umfasst, wobei jede Untergruppe mindestens eine elementare Detektionsfläche umfasst, wobei jede elementare Detektionsfläche ausgestaltet ist, um eine Position eines beweglichen Elements zu bestimmen, wobei jedes bewegliche Element der Mehrzahl von beweglichen Elementen durch ein Verwaltungsmodul aktivierbar ist, das einer Untergruppe zugeordnet ist, wobei das Verfahren die folgenden Schritte umfasst, für mindestens eine Untergruppe,

   - Eintragen (1010) mindestens eines beweglichen Elements bei dem Verwaltungsmodul der mindestens einen Untergruppe, wobei das mindestens eine bewegliche Element in eine Referenzliste von beweglichen Elementen eingetragen wird;
   - Reservieren (1015) eines Zeitraums, der für jedes in der Referenzliste referenzierte bewegliche Element unterschiedlich ist, wobei der Zeitraum das Aktivieren eines beweglichen Elements und das Bestimmen einer Position eines aktivierten beweglichen Elements gestattet, wobei die reservierten Zeiträume eine Sequenz bilden, die ein sequentielles Aktivieren der beweglichen Elemente gestattet, die bei dem Verwaltungsmodul der mindestens einen Untergruppe eingetragen werden;

   wobei mindestens ein bewegliches Element bei Verwaltungsmodulen von mindestens zwei unterschiedlichen Untergruppen eingetragen wird, wobei der Zeitraum, der für das mindestens eine bewegliche Element reserviert wird, das bei Verwaltungsmodulen von mindestens zwei unterschiedlichen Untergruppen eingetragen wird, in jeder der mindestens zwei Untergruppen der gleiche ist.

2. Verfahren nach Anspruch 1, ferner umfassend: einen Schritt des Vergleichens einer Position eines beweglichen Elements mit einer vorherbestimmten Zone und, in Reaktion auf das Vergleichen, einen Schritt des Veränderns mindestens eines Zeitraums, der für das bewegliche Element reserviert wird, dessen Position mit einer vorherbestimmten Zone verglichen wird.

3. Verfahren nach Anspruch 2, bei dem der Schritt des Veränderns mindestens eines reservierten Zeitraums das Reservieren eines neuen Zeitraums für das bewegliche Element umfasst, dessen Position mit einer vorherbestimmten Zone verglichen wird, wobei der neue Zeitraum der gleiche ist wie ein anderer zuvor für das bewegliche Element reservierter Zeitraum, dessen Position mit einer vorherbestimmten Zone verglichen wird, wobei der neue Zeitraum und der anderen Zeitraum in unterschiedlichen Verwaltungsmodulen der Untergruppen reserviert werden.

4. Verfahren nach Anspruch 2, bei dem der Schritt des Veränderns mindestens eines reservierten Zeitraums das Löschen eines Zeitraums umfasst, der zuvor für das bewegliche Element reserviert wurde, dessen Position mit einer vorherbestimmten Zone verglichen wird.

5. Verfahren nach einem der Ansprüche 2 bis 4, bei dem die vorherbestimmte Zone eine Zone ist, die einen Teil einer ersten elementaren Detektionsfläche einer ersten Untergruppe und einen Teil einer zweiten elementaren Detektionsfläche einer zweiten Untergruppe, die von der ersten Untergruppe verschieden ist, umfasst.

6. Verfahren nach einem der Ansprüche 1 bis 5, ferner umfassend einen Schritt des Synchronisierens von Positionsberechnungsmodulen, die jeder elementaren Detektionsfläche einer Untergruppe zugeordnet sind.

7. Verfahren nach einem der Ansprüche 1 bis 6, ferner umfassend einen Schritt des Aktivierens eines beweglichen Elements und einen Schritt des Bestimmens einer Position eines aktivierten beweglichen Elements, wobei die Schritte des Aktivierens und des Bestimmens gemäß der Sequenz durchgeführt werden.

8. Verfahren nach Anspruch 7, bei dem der Schritt des Bestimmens einer Position eines aktivierten beweglichen Elements einen Schritt des Messens einer Spannung am Ausgang einer Verarbeitungsschaltung, die mit jeder Detektionsschleife einer Mehrzahl von Detektionsschleifen einer elementaren Detektionsfläche verbunden ist, einen Schritt des Erhaltens einer Impedanz jeder der Detektionsschleifen der Mehrzahl von Detektionsschleifen und einen Schritt des Berechnens einer Spannung, die an den Klemmen jeder der Detektionsschleifen der Mehrzahl von Detektionsschleifen induziert wird, in Abhängigkeit von den erhaltenen Impedanzen und von Spannungsmessungen umfasst.

**9.** Verfahren nach einem der Ansprüche 1 bis 8, bei dem ein bewegliches Element durch ein Funksignal aktiviert wird, das eine eindeutige Kennung eines zu aktivierenden beweglichen Elements enthält.

**10.** Verfahren nach einem der Ansprüche 1 bis 9, ferner umfassend einen Schritt des Bestimmens der Position eines zuvor aktivierten beweglichen Elements und einen Schritt des Übertragens der bestimmten Position auf das zuvor aktivierte bewegliche Element.

**11.** Detektionsfläche zur Kopplung einer Mehrzahl von beweglichen Elementen mit einem Computersystem, wobei die Detektionsfläche eine Mehrzahl von elementaren Detektionsflächen (1110-11, 1110-12, 1110-13) umfasst, wobei die Mehrzahl von elementaren Detektionsflächen mindestens eine Gruppe (1100-1) bildet, die mehrere Untergruppen (1105-1, 1105-2, 1105-3) umfasst, wobei jede Untergruppe mindestens eine elementare Detektionsfläche umfasst, wobei jede elementare Detektionsfläche ausgestaltet ist, um eine Position eines beweglichen Elements zu bestimmen, wobei jedes bewegliche Element der Mehrzahl von beweglichen Elementen durch ein Verwaltungsmodul aktivierbar ist, das einer Untergruppe zugeordnet ist, wobei jedes einer Untergruppe zugeordnete Verwaltungsmodul ausgestaltet ist zum:

- Eintragen (1010) mindestens eines beweglichen Elements in eine Referenzliste beweglicher Elemente;
- Reservieren (1015) eines Zeitraums, der für jedes in der Referenzliste referenzierte bewegliche Element unterschiedlich ist, wobei der Zeitraum das Aktivieren eines beweglichen Elements und das Bestimmen einer Position eines aktivierten beweglichen Elements gestattet, wobei die reservierten Zeiträume eine Sequenz bilden, die ein sequentielles Aktivieren der beweglichen Elemente gestattet, die bei dem Verwaltungsmodul der mindestens einen Untergruppe eingetragen sind; wobei Verwaltungsmodule, die Untergruppen zugeordnet sind, ferner so ausgestaltet sind, dass ein gleicher Zeitraum für ein gleiches beweglichen Element reserviert ist, das bei mehreren Verwaltungsmodulen von mindestens zwei unterschiedlichen Untergruppen eingetragen ist.

**12.** Detektionsfläche nach Anspruch 11, wobei mindestens eine elementare Detektionsfläche eine Mehrzahl von Detektionsschleifen umfasst und wobei ein Positionsberechnungsmodul der mindestens einen elementaren Detektionsfläche zugeordnet ist, wobei das Positionsberechnungsmodul ausgestaltet ist, um eine Impedanz für jede der elementaren Detektionsschleifen zu erhalten und um eine Spannung, die an den Klemmen jeder der Detektionsschleifen der Mehrzahl von Detektionsschleifen induziert wird, in Abhängigkeit von den erhaltenen Impedanzen zu berechnen.

**13.** Detektionsfläche nach Anspruch 11 oder Anspruch 12, wobei ein Verwaltungsmodul, das einer Untergruppe zugeordnet ist, ferner ausgestaltet ist, um ein bewegliches Element durch ein Funksignal zu aktivieren, das eine eindeutige Kennung eines zu aktivierenden beweglichen Elements enthält.

**Claims**

**1.** A control method in a system comprising a detection surface interfacing a plurality of mobile entities with a computer system, the detection surface comprising a plurality of elementary detection surfaces (1110-11, 1110-12, 1110-13), the elementary detection surfaces forming at least one group (1100-1) comprising several sub-groups (1105-1, 1105-2, 1105-3), each sub-group comprising at least one elementary detection surface, each elementary detection surface being configured to determine a position of a mobile entity, it being possible for each mobile entity of the plurality of mobile entities to be activated by a management module associated with a sub-group, the method comprising the following steps,
for at least one sub-group,

- registering (1010) at least one mobile entity with the management module of the at least one sub-group, the at least one mobile entity being registered in a list of mobile entity references;
- reserving (1015) a different period of time for each mobile entity referenced in the list of references, said period of time enabling the activation of a mobile entity and the determination of a position of an activated mobile entity, the reserved periods of time forming a sequence enabling a sequential activation of the mobile entities registered with the management module of said at least one sub-group;

at least one mobile entity being registered with management modules of at least two different sub-groups, the period of time reserved for said at least one mobile entity registered with management modules of at least two different sub-groups being the same in each of said at least two sub-groups.

2. A method according to claim 1, further comprising a step of making a comparison of a position of a mobile entity with a predetermined zone and, in response to the comparison, a step of modifying at least one period of time reserved for the mobile entity of which the position has been compared with a predetermined zone.

3. A method according to claim 2, wherein said step of modifying at least one reserved period of time comprises the reservation of a new period of time for the mobile entity of which the position has been compared with a predetermined zone, the new period of time being the same as another period of time reserved previously for the mobile entity of which the position has been compared with a predetermined zone, the new period of time and the other period of time being reserved in management modules of different sub-groups.

4. A method according to claim 2, wherein said step of modifying at least one reserved period of time comprises the cancellation of a period of time previously reserved for the mobile entity of which the position has been compared with a predetermined zone.

5. A method according to any one of claims 2 to 4 wherein the predetermined zone is a zone comprising part of a first elementary detection surface of a first sub-group and part of a second elementary detection surface of a second sub-group different from the first sub-group.

6. A method according to any one of claims 1 to 5 further comprising a step of synchronizing position computing modules associated with each elementary detection surface of a sub-group.

7. A method according to any one of claims 1 to 6 further comprising a step of activating a mobile entity and a step of determining a position of an activated mobile entity, the activating and determining steps being carried out according to said sequence.

8. A method according to claim 7, wherein the step of determining a position of an activated mobile entity comprises a step of measuring a voltage output from a processing circuit connected to each detection loop of a plurality of detection loops of an elementary detection surface, a step of obtaining an impedance of each of the detection loops of the plurality of detection loops and a step of computing a voltage induced at the terminals of each of the detection loops of the plurality of the detection loops according to the impedances obtained and voltage measurements.

9. A method according to any one of claims 1 to 8 wherein a mobile entity is activated by a radio signal comprising a unique identifier of a mobile entity to activate.

10. A method according to any one of claims 1 to 9 further comprising a step of determining the position of a previously activated mobile entity and a step of sending the determined position to said previously activated mobile entity.

11. A detection surface for interfacing a plurality of mobile entities with a computer system, the detection surface comprising a plurality of elementary detection surfaces (1110-11, 1110-12, 1110-13), the elementary detection surfaces forming at least one group (1100-1) comprising several sub-groups (1105-1, 1105-2, 1105-3), each sub-group comprising at least one elementary detection surface, each elementary detection surface being configured to determine a position of a mobile entity, it being possible for each mobile entity of the plurality of mobile entities to be activated by a management module associated with a sub-group, each management module associated with a sub-group being configured for:

   - registering (1010) at least one mobile entity in a list of references of mobile entities;
   - reserving (1015) a different period of time for each mobile entity referenced in the list of references, said period of time enabling the activation of a mobile entity and the determination of a position of an activated mobile entity, the reserved periods of time forming a sequence enabling a sequential activation of the mobile entities registered with the management module of said at least one sub-group;

   management modules associated with sub-groups being furthermore configured such that a same period of time is reserved for a same mobile entity registered with several management modules of at least two different sub-groups.

12. A detection surface according to claim 11 wherein at least one elementary detection surface comprises a plurality of detection loops and a position computing module is associated with the at least one elementary detection surface, the position computing module being configured to obtain an impedance for each of the elementary detection loops and to compute a voltage induced at the terminals of each of the detection loops of the plurality of the detection loops according to the obtained impedances.

13. A detection surface according to claim 11 or claim 12 wherein a management module associated with a sub-group is furthermore configured to activate a mobile entity by a radio signal comprising a unique identifier of a mobile entity to activate.

Fig. 1

EP 3 187 989 B1

Fig. 2

Fig. 3

Fig. 4

Sous-groupe k

| TimeSlot 0 | TimeSlot 1 | ... | TimeSlot i | ... | TimeSlot n-1 | TimeSlot 0 |
|---|---|---|---|---|---|---|

$t_0$   $t_1$   $t_i$   $t_{n-1}$   $t_n$

$SS_k$   $S_{k,\,t1,E(1)}$   $S_{k,ti,E(i)}$   $S_{k,tn-1,E(n-1)}$   $SS_k$

$S_{k,t0,E(0)}$   $S_{k,tn,E(0)}$

séquence

Fig. 6

Fig. 5

Sous-groupe k

Surface j

**Fig. 7**

Groupe m

Sous-groupe j

| TS 0 | TS 1 | ... | TS q | ... | TS n-1 | TS 0 | | ... |
|---|---|---|---|---|---|---|---|---|
| E(a) ⟩⟩ j | | | E(w) ⟩⟩ j | | E(c) ⟩⟩ j | E(a) ⟩⟩ j | | |

Sous-groupe k

| TS 0 | TS 1 | ... | TS q | ... | TS n-1 | TS 0 | | ... |
|---|---|---|---|---|---|---|---|---|
| | E(d) ⟩⟩ k | | E(g) ⟩⟩ k | | E(f) ⟩⟩ k | | | t |

$t_0$    $t_1$    $t_q$    $t_{n-1}$    $t_n$

$SS_m$    $S_{j,t1,E(d)}$    $S_{j,tq,E(w)}$    $S_{j,tn-1,E(c)}$    $SS_m$

$S_{j,t0,E(a)}$    $S_{k,t1,E(d)}$    $S_{k,tq,E(g)}$    $S_{k,tn-1,E(f)}$    $S_{j,tn,E(a)}$

$S_{k,t0,E(a)}$    $S_{k,tn,E(a)}$

sous-séquence 1      sous-séquence 2

séquence

**Fig. 8**

26

900

| SG1 | xxx | 900 | xxx | ... |
|-----|-----|-----|-----|-----|
| SG2 | xxx | xxx | xxx | ... |

Fig. 9a

| SG1 | 900 | xxx | xxx | ... |
|-----|-----|-----|-----|-----|
| SG2 | 900 | xxx | xxx | ... |

Fig. 9b

| SG1 | 900 | xxx | xxx | ... |
|-----|-----|-----|-----|-----|
| SG2 | 900 | xxx | xxx | ... |

Fig. 9c

| SG1 | xxx | xxx | xxx | ... |
|-----|-----|-----|-----|-----|
| SG2 | xxx | 900 | xxx | ... |

Fig. 9d

Fig. 10

Fig. 11

ROM
(prog, prog1, prog2) ‑ 1206

1200

CPU
1204

1210

Interface de
communication

Réseau
1212

RAM

1202

1208        1216

I/O

Lecteur de cartes

1214

Boucles de
détection ou
circuits de
traitement

Carte ‑ 1218

Fig. 12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2860985
- FR 2964479
- EP 0347396 A1